# EUROPÄISCHE PATENTSCHRIFT

(11) **EP 2 287 513 B1**
(45) Veröffentlichungstag und Bekanntmachung des Hinweises auf die Patenterteilung: **02.01.2013**
(21) Anmeldenummer: 10172915.0
(22) Anmeldetag: 16.08.2010
(51) Int. Cl.: F16L 55/165, E21B 19/083, E21B 19/086

(54) **Vorrichtung und Verfahren zum Bewegen eines Arbeitsmittels im Erdreich**
Method and device for moving a tool in soil
Dispositif et procédé de déplacement d'un moyen de travail dans la terre

(30) Priorität: 19.08.2009 DE 102009038058
(43) Veröffentlichungstag der Anmeldung: 23.02.2011
(73) Patentinhaber: TERRA AG fuer Tiefbautechnik, 4805 Brittnau (CH)
(72) Erfinder: Jenne, Dietmar, 4805 Brittnau (CH); Neumann, Manfred, 5746 Walterswil (CH)
(74) Vertreter: Schaumburg, Thoenes, Thurn, Landskron, Eckert

(56) Entgegenhaltungen:
- DE-B3- 10 332 328
- DE-C2- 19 608 980
- US-A1- 2007 245 516

## Beschreibung

Die Erfindung betrifft eine Vorrichtung zum Bewegen eines Arbeitsmittels im Erdreich, die eine Zug-/Schubeinheit zum Erzeugen einer linearen Bewegung eines über ein Gestänge mit der Zug-/Schubeinheit verbundenen Arbeitsmittels aufweist. Eine solche Vorrichtung kann beispielsweise zum Erneuern von im Erdreich verlegten Versorgungsleitungen genutzt werden. Zu diesem Zweck wird mit dem von der Vorrichtung entfernten Ende des Gestänges ein die alte Leitung zerstörendes Werkzeug und/oder ein Aufweitkopf als Arbeitsmittel verbunden. Dieses Arbeitsmittel wird zusammen mit einem neuen Leitungsabschnitt beim Rückzug des Gestänges in das Erdreich eingezogen. Eine solche Anordnung und eine zum Antrieb des Gestänges geeignete Vorrichtung sind beispielsweise aus dem Dokument DE 103 32 328 B3 bekannt. Diese bekannte Vorrichtung umfasst eine zwei Klemmbacken umfassende automatische Klemmvorrichtung zum Herstellen einer Arbeitsverbindung zwischen der Zug-/Schubeinheit und dem Gestänge. Die Kupplungsbacken sind um jeweils einen Zapfen schwenkbar angeordnet. Zwischen den Kupplungsbacken ist das Gestänge bei einer Antriebsbewegung der Zug-/Schubeinheit einklemmbar. Die automatische Klemmvorrichtung klemmt dabei das Gestänge in einer Arbeitsrichtung. Die Klemmvorrichtung ist dabei derart ausgebildet, dass sie zur Änderung der Arbeitsrichtung umstellbar ist, und so wahlweise einen Vorschub oder einen Rückzug des Gestänges bewirkt. In der zur Arbeitsrichtung entgegengesetzten Bewegungsrichtung ist die Klemmvorrichtung relativ zu dem Gestänge frei bewegbar.

Mit Hilfe der Klemmvorrichtung folgt eine rein kraftschlüssige Verbindung zwischen der Klemmvorrichtung und dem Gestänge. Insbesondere bei einer Verschmutzung des Gestänges und/oder der Kupplungsbacken beim Baustelleneinsatz kann die Andruckkraft der Kupplungsbacken auf das Gestänge beim Klemmen des Gestänges reduziert sein, sodass ein Durchrutschen des Gestänges durch die Kupplungsbacken im geklemmten Zustand nicht sicher verhindert werden kann.

Aus dem Dokument DE 196 08 980 C2 ist eine Vorrichtung zum Bohren im Erdreich bekannt, bei der eine Kupplung zwischen einer Zug-/Schubeinheit und einem Gestänge über in Vorsprünge oder Ausnehmungen des Gestänges formschlüssig eingreifende Kupplungsmittel bekannt ist. Dabei ist vorgesehen, dass eine als Kupplungsmittel verwendete Klinke hinter einem Vorsprung oder in einer Ausnehmung einrastet. Dadurch wird die gesamte in das Gestänge einzuleitende Vortriebskraft über die formschlüssigen Kupplungsmittel eingeleitet. Dazu müssen sowohl die Klinke und ein Drehbolzen zur schwenkbaren Anordnung der Klinke als auch die Ausnehmungen bzw. die Vorsprünge entsprechend groß dimensioniert sein, damit die Kupplungsmittel die erforderliche Vorschubkraft in das Gestänge einleiten können. Insbesondere unter Baustellenbedingungen können Verschmutzungen der Kupplungsmittel sowie der Vorsprünge bzw. der Ausnehmungen auftreten, die die Eingriffsbereiche zum Eingriff der Kupplungsmittel reduzieren. Dadurch besteht die Gefahr, dass keine sichere formschlüssige Verbindung zwischen dem Kupplungsmittel und dem Gestänge erzeugt werden kann. Insbesondere kann das Kupplungsmittel aus einem durch den Vorsprung oder die Ausnehmung im Gestänge gebildeten, verschmutzten Eingriffsbereich herausspringen. Insbesondere ist es möglich, dass aufgrund der geringen Übertragungsfläche hohe mechanische Spannungen auftreten und es dadurch zu Beschädigungen des Gestänges und/oder der Kupplungsmittel kommen kann. Ferner ist es für eine formschlüssige Kupplung erforderlich relativ große Vorsprünge oder Ausnehmungen vorzusehen, wodurch ein relativ großer Gesamtquerschnitt des Gestänges erforderlich ist. Die gesamten auf das Gestänge ausgeübten Zug- und Druckkräfte müssen von dem im Bereich der Ausnehmungen verbleibenden Gestängequerschnitt bzw. von dem Gestängequerschnitt außerhalb der Vorsprünge übertragen werden.

Bei den aus den Dokumenten DE 103 32 328 B3 und DE 196 08 980 C2 bekannten Vorrichtungen können Gestänge eingesetzt werden, die aus einzelnen Stangenteilen zusammengesetzt oder als Gelenkkette ausgebildet sind. Ferner können die bekannten Vorrichtungen in Gruben angeordnet werden, die ins Erdreich eingebracht sind. Das Gestänge kann dann mit Hilfe der Vorrichtung in eine in der Grube endende vorzugsweise zu erneuernde Versorgungsleitung hineingeschoben werden, bis ein Endbereich des Gestänges am anderen Ende der Versorgungsleitung aus dieser herausragt. Mit diesem Ende kann dann ein Arbeitsmittel und vorzugsweise eine einzuziehende Versorgungsleitung verbunden werden. Mit Hilfe der Vorrichtung wird das Gestänge dann zusammen mit dem Arbeitsmittel und der neuen einzuziehenden Versorgungsleitung durch die alte Versorgungsleitung hindurchgezogen. Vorzugsweise wird dabei die alte Versorgungsleitung zerstört, der Bereich um die alte Versorgungsleitung aufgeweitet und die neue Versorgungsleitung in den aufgeweiteten Bereich eingezogen.

Dokument US 2007 02 45516 zeigt eine Vorrichtung nach den Oberbegriff des Anspruchs 1.

Aufgabe der Erfindung ist es, eine Vorrichtung und ein Verfahren zum Bewegen eines Arbeitsmittels im Erdreich anzugeben, bei denen eine zuverlässige Kupplung zwischen einer Zug-/Schubeinheit und einem Gestänge einfach möglich ist.

Diese Aufgabe wird durch eine Vorrichtung zum Bewegen eines Arbeitsmittels im Erdreich mit den Merkmalen des Patentanspruchs 1 und durch ein Verfahren mit den Merkmalen des unabhängigen Verfahrensanspruchs gelöst. Vorteilhafte Weiterbildungen der Erfindung sind in den abhängigen Patentansprüchen angegeben.

Durch die erfindungsgemäße Vorrichtung und durch das erfindungsgemäße Verfahren zum Bewegen eines Arbeitsmittels im Erdreich wird erreicht, dass eine ausreichend hohe Anpresskraft zum Erzeugen einer sicheren kraftschlüssigen Verbindung zwischen der Zug-/Schubeinheit und dem Gestänge selbst dann erzeugt wird, wenn das Kupplungsmittel und/oder das Gestänge im Kupplungsbereich Verschmutzungen aufweisen. Dadurch kann insbesondere auf zusätzliche Mittel zur Erhöhung der Haftung zwischen dem Kupplungsmittel und dem Gestänge verzichtet werden, wie sie bei rein kraftschlüssigen Verbindungen im Stand der Technik üblich sind. Insbesondere kann auf das Vorsehen spezieller Oberflächen mit einer relativ hohen Rauigkeit, beispielsweise durch das Einbringen von Nuten und Rifflungen, im Kontaktbereich zwischen Kupplungsmittel und Gestänge verzichtet werden. Insbesondere durch das auf das Kupplungsmittel wirkende Drehmoment kann eine sehr hohe Anpresskraft des Kupplungsmittels auf das Gestänge ausgeübt werden. Mit Hilfe der Anordnung der Drehachse des Kupplungsmittels und des zweiten Kontaktbereichs kann das Kräfteverhältnis zwischen Vorschubkraft und Anpresskraft eingestellt werden. Dieses Kräfteverhältnis von Vorschubkraft zu Anpresskraft liegt bei vorteilhaften Ausführungsformen im Bereich von 1 : 2 bis 1 : 8, vorzugsweise im Bereich von 1 : 3 bis 1 : 4.

Bei einem Kräfteverhältnis von 1 : 3 wird somit bei einer Vorschubkraft von 10 t (98 100 N) eine Anpresskraft von 30 t (294 300 N) ausgeübt. Dadurch ist eine sichere und selbst unter Baustellenbedingungen zuverlässige Kupplung und Kraftübertragung zwischen der Zug-/Schubeinheit und dem Gestänge auf einfache Weise möglich. Insbesondere wird durch die erfindungsgemäße Kupplung ein Durchrutschen des Gestänges zwischen dem Gestänge und dem Kupplungsmittel ohne zusätzliche Maßnahmen verhindert.

Bei einer vorteilhaften Weiterbildung der Erfindung ist die Zug-/Schubeinheit druckmittelbetrieben und hat mindestens einen Arbeitszylinder und einen Kolben mit einer Kolbenstange. Die Kolbenstange oder der Arbeitszylinder sind mit einer das Kupplungsmittel umfassenden Kupplungsanordnung verbunden und bewegen diese Kupplungsanordnung relativ zu einem Rahmen der Vorrichtung. Dadurch ist ein einfacher und robuster Antrieb zur Bewegung des Gestänges möglich, der für rauen Baustelleneinsatz geeignet ist.

Der Arbeitszylinder und die Kolbenstange können einen Kanal zum Durchtritt des Gestänges haben. Dadurch kann das Gestänge durch den Zylinder hindurchgeführt werden, wodurch eine platzsparende Anordnung möglich ist, die eine relativ kleine Bauform der Vorrichtung ermöglicht und beim Einsatz der Vorrichtung in einer in das Erdreich einzubringenden Grube nur relativ geringe Grubenabmessungen erfordert.

Die lineare Bewegung des Gestänges erzeugt eine Zugbewegung und/oder eine Schubbewegung eines mit einem Endbereich des Gestänges verbundenen Arbeitsmittels. Dadurch kann das mit dem Gestänge verbundene Arbeitsmittel sowohl durch eine Schubbewegung ins Erdreich eingebracht werden als auch von einem bereits durch das Erdreich geführten Gestänge durch das Erdreich zur Vorrichtung gezogen werden. Das Gestänge kann insbesondere durch ein bestehendes im Erdreich verlegtes Rohr hindurchgeführt werden, ohne dass ein Arbeitsmittel mit dem ins Rohr eingebrachten Endbereich des Gestänges verbunden ist. Nachdem das Gestänge am gegenüberliegenden Ende des Rohrs angekommen ist und vorzugsweise aus diesem herausragt, kann das Arbeitsmittel mit dem Endbereich des Gestänges verbunden werden. Nach einer Richtungsumkehr der Antriebsrichtung kann das mit dem Endbereich des Gestänges verbundene Arbeitsmittel durch eine Zugbewegung zur Vorrichtung hin gezogen werden, sodass das Arbeitsmittel durch das Rohr und/oder durch das das Rohr umgebende Erdreich gezogen wird.

Besonders vorteilhaft ist es, eine das Kupplungsmittel umfassende Kupplungsanordnung als automatische Kupplungsanordnung auszubilden. Die automatische Kupplungsanordnung klemmt mit Hilfe des mindestens einen Kupplungsmittels in einer Arbeitsrichtung der Zug-/Schubeinheit das Gestänge und ist in der zur Arbeitsrichtung entgegengesetzten Richtung relativ zum Gestänge frei bewegbar. Dadurch kann ein automatisches Nachfassen bei einer Hin- und Herbewegung des Kupplungsmittels bzw. der Kupplungsanordnung erfolgen, ohne dass Eingriffe einer Bedienperson dazu erforderlich sind. Dadurch kann die Vorrichtung das Gestänge automatisch ohne weitere Bedieneingriffe sukzessive bewegen. Beim Einbringen eines mehrere Gestängeelemente umfassenden Gestänges ins Erdreich kann eine Bedienperson der Vorrichtung kontinuierlich Gestängeelemente zuführen und diese mit einem vorhergehenden Gestängeelement verbinden, währenddessen die Vorrichtung das aus zuvor eingelegten Gestängeelementen zusammengesetzte Gestänge automatisch sukzessive durch eine Hin- und Herbewegung der Kupplungsanordnung bewegt. Nach einer Umkehr der Arbeitsrichtung, d. h. bei einem Rückzug des Gestänges, kann der Rückzug automatisch sukzessive mit einer Hin- und Herbewegung der Kupplungsanordnung erfolgen, wobei eine Bedienperson die zurückgezogenen Gestängeelemente voneinander trennen und aus der Vorrichtung entnehmen kann.

Die Umkehr der Arbeitsrichtung der Kupplungsanordnung kann durch ein Umsteuern des Kupplungsmittels, vorzugsweise durch eine andere Anordnung des Kupplungsmittels, voreingestellt werden, sodass das Kupplungsmittel der Kupplungsanordnung nur in die voreingestellte Arbeitsrichtung mit dem Gestänge in Antriebsverbindung bringbar ist. Dadurch ist ein einfaches Umsteuern der Arbeitsrichtung der Vorrichtung möglich, ohne dass die Vorrichtung aufwendig gedreht werden muss.

Besonders vorteilhaft ist es, wenn das Gestänge mehrere umlaufende Nuten oder mehrere umlaufende Vorsprünge hat. Der Abstand zweier benachbarter Nuten bzw. zweier benachbarter Vorsprünge ist vorzugsweise kleiner oder gleich der Länge einer in einem Arbeitsschritt durch die Zug-/Schubeinheit erzeugbaren linearen Bewegung. Dadurch ist das Kupplungsmittel für eine im nächsten Arbeitsschritt auszuführende Bewegung des Gestänges mit einer weiteren Ausnehmung bzw. einem weiteren Vorsprung in Eingriff bringbar. Durch eine solche Anordnung der Vorsprünge und/oder umlaufenden Nuten ist ein Eingriff des Kupplungsmittels insbesondere bei einem rotationssymmetrischen Gestänge unabhängig von der Winkelstellung des Gestänges um seine Längsachse oder bei einem Dreikant- oder Mehrkantgestänge ein Winkelversatz um entsprechende Seiten-Rotationswinkel möglich, ohne dass dies eine Anpassung des Kupplungsmittels erfordert.

Besonders vorteilhaft ist es, die Flanke des Vorsprungs oder der Vertiefung, in die das Kupplungsmittel über den ersten Kontaktbereich eingreift, senkrecht zur Längsachse des Gestänges oder in einem spitzen Winkel zur Längsachse des Gestänges anzuordnen. Dadurch wird insbesondere eine hinterschnittene Anordnung vermieden, in der sich das Kupplungsmittel verhaken könnte. Wird ein spitzer Winkel vorgesehen, kann das Kupplungsmittel nach einer Umkehr der Arbeitsrichtung beim Rückzug der Kupplungsanordnung über die schräge Flanke gleiten, wodurch ein Abrieb, insbesondere am Kupplungsmittel, beim Rückzug vermieden wird.

Besonders vorteilhaft ist es, wenn die Ausnehmung und/oder der Vorsprung eine der ersten Flanke gegenüberliegende zweite Flanke haben, wobei die Flanken spiegelsymmetrisch zu einer Ebene angeordnet sind, durch die die Längsachse des Gestänges orthogonal durchstößt. Dadurch kann insbesondere bei einer Umsteuerung der Arbeitsrichtung die gleiche Flanke zum Eingriff des Kupplungsmittels bereitgestellt werden, wodurch eine einfache Umkehr der Arbeitsrichtung möglich ist.

Eine auf der Oberfläche der Flanke verlaufende Gerade schneidet die Längsachse des Gestänges in einem Schnittwinkel, der einen Wert im Bereich zwischen 25° und 65°, vorzugsweise im Bereich zwischen 30° und 60°, insbesondere einen Wert von 45°, hat. Der Schnittwinkel ist dabei der kleinere Winkel zwischen zwei sich schneidenden Geraden.

Ein Eingriffsbereich des Kupplungsmittels, der den ersten Kontaktbereich umfasst, ist beim Übertragen der ersten Vorschubkraft komplementär zur Flanke der Aussparung ausgebildet. Dadurch erfolgt beim Eingriff ein Flächenkontakt zwischen dem ersten Kontaktbereich und der Flanke des Vorsprungs bzw. der Flanke der Ausnehmung. Die erste Vorschubkraft kann über eine relativ große, vorzugsweise über die gesamte Fläche vom Kupplungsmittel zum Gestänge übertragen werden.

Alternativ verlaufen der Eingriffsbereich des Kupplungsmittels und die Flanke der Ausnehmung bzw. die Flanke des Vorsprungs nicht parallel. Dadurch erfolgt die Kraftübertragung über eine den Kontaktbereich bildende Kontaktlinie. Durch die Übertragung der ersten Vorschubkraft über eine Kontaktlinie bzw. einen sehr geringen Kontaktbereich werden hohe Haftkräfte zwischen dem Kontaktbereich und der Flanke erzeugt und ein sicherer Halt des Kupplungsmittels an der Flanke bewirkt. Dabei kann eine auf der Oberfläche der Flanke verlaufende Gerade die Längsachse des Gestänges in einem ersten Schnittwinkel schneiden. Eine auf der Oberfläche des Eingriffsbereichs verlaufende Gerade schneidet die Längsachse des Gestänges beim Übertragen der ersten Vorschubkraft in einem zweiten Schnittwinkel. Der erste Schnittwinkel ist größer oder kleiner als der zweite Schnittwinkel. Dadurch kann auf einfache Art und Weise ein im Idealfall linienförmiger Kontaktbereich bewirkt werden. Vorzugsweise haben die Schnittwinkel einen Unterschied im Bereich zwischen 1° und 20°, insbesondere von 5°.

Die Schnittwinkel sind vorzugsweise in einer Ebene angeordnet, die die Längsachse des Gestänges enthält und deren Normalenvektor parallel zur Drehachse des Kupplungsmittels verläuft. Besonders vorteilhaft ist es, mindestens zwei jeweils um eine Drehachse drehbare Kupplungsmittel zum Erzeugen der Antriebsverbindung zwischen der Zug-/Schubeinheit und dem Gestänge vorzusehen, die vorzugsweise auf gegenüberliegenden Seiten des Gestänges angeordnet sind. Die Kupplungsmittel können dann auf gegenüberliegenden Seiten in den Vorsprung bzw. in jeweils einen Vorsprung und/oder eine Ausnehmung bzw. jeweils eine Ausnehmung des Gestänges derart eingreifen, dass das jeweilige Kupplungsmittel über einen ersten Kontaktbereich des jeweiligen Kupplungsmittels jeweils eine erste Vorschubkraft der Zug-/Schubeinheit auf das Gestänge überträgt. Dadurch kann das Gestänge auf einfache Art und Weise zwischen den Kupplungsmitteln eingeklemmt werden. Ferner können mehr als zwei Kupplungsmittel vorgesehen sein, insbesondere drei oder vier Kupplungsmittel, die radial um das Gestänge, vorzugsweise im gleichen Winkelabstand zueinander angeordnet sind. Die Kupplungsmittel greifen in denselben Vorsprung und/oder dieselbe Ausnehmung ein. Alternativ können die Kupplungsmittel in jeweils einen Vorsprung und/oder in jeweils eine Ausnehmung eingreifen.

Ferner ist es bei der erfindungsgemäßen Vorrichtung und dem erfindungsgemäßen Verfahren vorteilhaft, wenn die Anpresskraft, mit der der zweite Kontaktbereich gegen das Gestänge gedrückt wird, größer ist als die Gewichtskraft des Kupplungsmittels. Dadurch ist es möglich, tatsächlich eine kraftschlüssige Verbindung zwischen dem Kupplungsmittel und dem Gestänge herzustellen und die Baugröße des Kupplungsmittels relativ gering zu halten.

Weitere Merkmale und Vorteile der Erfindung ergeben sich aus der folgenden Beschreibung, die die Erfindung in Verbindung mit den beigefügen Figuren anhand von Ausführungsbeispielen näher erläutert.

Es zeigen:
- Figur 1: eine erste perspektivische Darstellung einer erfindungsgemä- ßen Vorrichtung zum Bewegen eines Arbeitsmittels im Erd- reich;
- Figur 2: eine zweite perspektivische Darstellung der Vorrichtung nach Figur 1 mit einem Gestängeelement;
- Figur 3: eine Draufsicht des Gestängeelements nach Figur 2;
- Figur 4: eine vergrößerte Darstellung eines Ausschnitts A nach Figur 3;
- Figur 5: eine Draufsicht der Vorrichtung nach den Figuren 1 und 2;
- Figur 6: eine vergrößerte Darstellung eines Ausschnitts B nach Figur 5 mit einer teilgeschnittenen Darstellung einer Kupplungsan- ordnung zum Herstellen einer Antriebsverbindung zwischen einer Zug-/Schubeinheit der Vorrichtung und dem Gestänge;
- Figur 7: eine Kupplungsanordnung gemäß einer ersten Ausführungs- form der Erfindung in einer geschnittenen Darstellung mit einer Voreinstellung der Kupplungsbacken für eine Bewe- gung des Gestänges in eine erste Antriebsrichtung;
- Figur 8: die Kupplungsanordnung nach Figur 7, wobei die Kupp- lungsbacken der Kupplungsanordnung in einer Neutralstel- lung angeordnet sind;
- Figur 9: die Kupplungsanordnung nach den Figuren 7 und 8 mit einer Voreinstellung der Kupplungsbacken für eine Bewegung des Gestänges in einer zur ersten Antriebsrichtung entgegenge- setzten zweiten Antriebsrichtung;
- Figur 10: eine Kupplungsanordnung gemäß einer zweiten Ausführungs- form der Erfindung in einer geschnittenen Darstellung mit einer Voreinstellung der Kupplungsbacken für eine Bewe- gung des Gestänges in eine erste Antriebsrichtung;
- Figur 11: die Kupplungsanordnung nach Figur 10, wobei die Kupp- lungsbacken in einer Neutralstellung angeordnet sind;
- Figur 12: die Kupplungsanordnung nach den Figuren 10 und 11 mit einer Voreinstellung der Kupplungsbacken für eine Bewe- gung des Gestänges in einer zur ersten Antriebsrichtung ent- gegengesetzten zweiten Antriebsrichtung;
- Figur 13: eine Kupplungsanordnung gemäß einer dritten Ausführungs- form der Erfindung in einer geschnittenen Darstellung mit einer Voreinstellung der Kupplungsbacken für eine Bewe- gung des Gestänges in eine erste Antriebsrichtung;
- Figur 14: eine Kupplungsanordnung gemäß einer vierten Ausführungs- form der Erfindung in einer geschnittenen Darstellung mit einer Voreinstellung der Kupplungsbacken für eine Bewe- gung des Gestänges in eine erste Antriebsrichtung;
- Figur 15: eine Kupplungsanordnung gemäß einer fünften Ausführungs- form der Erfindung in einer geschnittenen Darstellung mit einer Voreinstellung der Kupplungsbacken für eine Bewe- gung des Gestänges in eine erste Antriebsrichtung;
- Figur 16: eine Kupplungsanordnung gemäß einer sechsten Ausfüh- rungsform der Erfindung in einer geschnittenen Darstellung mit einer Voreinstellung der Kupplungsbacken für eine Be- wegung des Gestänges in eine erste Antriebsrichtung;
- Figur 17: eine perspektivische Ansicht einer Kupplungsbacke gemäß der ersten Ausführungsform der Erfindung;
- Figur 18: eine zweite perspektivische Ansicht der Kupplungsbacke nach Figur 17
- Figur 19: eine geschnittene Darstellung der Kupplungsbacke nach den Figuren 17 und 18;
- Figur 20: eine Schnittdarstellung einer ersten Kupplungsbacke gemäß der dritten Ausführungsform der Erfindung;
- Figur 21: eine geschnittene Darstellung einer zweiten Kupplungsbacke gemäß einer zur dritten Ausführungsform alternativen Aus- führungsform der Erfindung;
- Figur 22: eine geschnittene Darstellung einer ersten Kupplungsbacke der vierten Ausführungsform der Erfindung; und
- Figur 23: eine geschnittene Darstellung einer zweiten Kupplungsbacke gemäß einer zur vierten Ausführungsform alternativen Aus- führungsform der Erfindung.

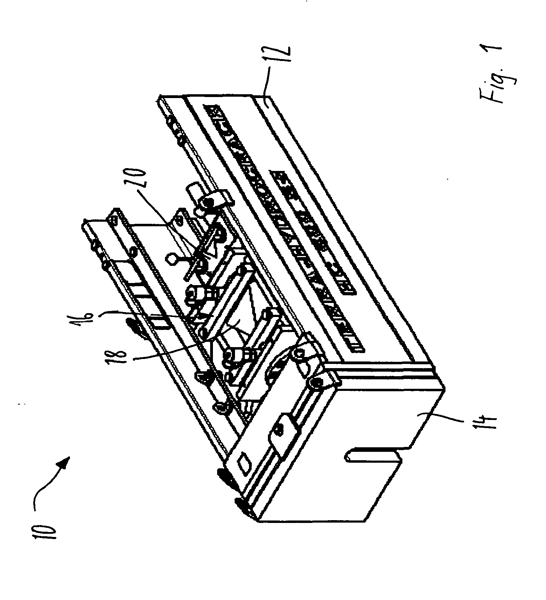

In Figur 1 ist eine Vorrichtung 10 zum Bewegen eines nicht dargestellten Arbeitsmittels im Erdreich dargestellt. Die Vorrichtung umfasst einen allgemein mit 12 bezeichneten Rahmen zur Aufnahme von Elementen der Vorrichtung 10 sowie eine Frontplatte 14 zur Abstützung der Vorrichtung 10 gegen das Erdreich bei einem Betrieb der Vorrichtung 10. Die allgemein mit 16 bezeichnete Zug-/Schubeinheit umfasst einen Arbeitszylinder 18. Ferner umfasst die Vorrichtung 10 eine Kupplungsanordnung 20, die mit dem freien Ende einer Kolbenstange des Arbeitszylinders 18 verbunden ist.

Der Antrieb der Kupplungsanordnung 20 erfolgt dabei über den Arbeitszylinder 18 in bekannter Weise, wobei mit Hilfe des Arbeitszylinders abwechselnd eine Hin- und Herbewegung der Kupplungsanordnung 20 erzeugt werden kann.

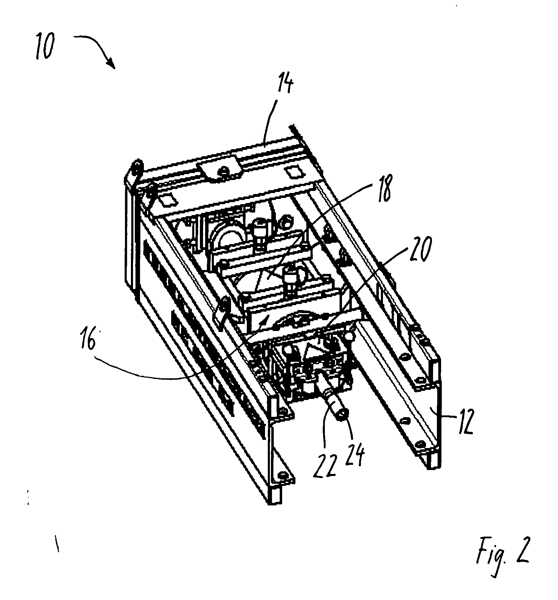

In Figur 2 ist eine weitere perspektivische Darstellung der Vorrichtung 10 nach Figur 1 gezeigt. Gleiche Elemente haben dieselben Bezugszeichen. In Figur 2 ist zusätzlich ein Gestängeelement 22 dargestellt, das durch eine Öffnung in der Kolbenstange des Arbeitszylinders 18 durch diesen hindurchgeführt ist, sodass weitere Gestängeelemente mit dem in Figur 2 dargestellten Gestängeelement 22 zu einem Gestänge zusammengeführt werden. Hierbei kann eines der weiteren Gestängeelemente mit einem Kontaktbereich 24 des Gestängeelements 22 über einen komplementären Kontaktbereich dieses weiteren Gestängeelements verbunden werden. Beispielsweise können die Kontaktbereiche als Gewinde, Bajonettverschluss, Einklinken oder Einrasten oder weitere geeignete Verbindungsmittel ausgebildet sein.

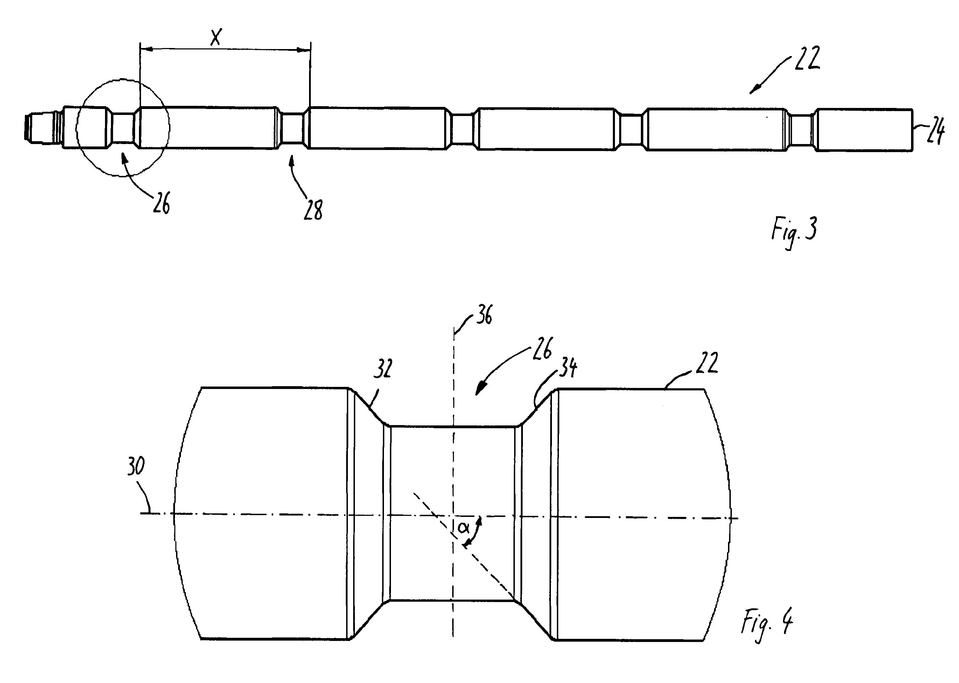

In Figur 3 ist das Gestängeelement 22 nach Figur 2 gezeigt. Das Gestängeelement 22 hat im vorliegenden Ausführungsbeispiel fünf umlaufende Vertiefungen, von denen zwei mit den Bezugszeichen 26 und 28 bezeichnet sind. Die benachbarten Vertiefungen 26, 28 haben einen mit X bezeichneten Abstand zueinander. Der Abstand X ist kleiner als der Hubbereich der Kolbenstange des Arbeitszylinders 18 der Vorrichtung nach den Figuren 1 und 2, sodass nach dem Ausfahren der Kolbenstange durch einen Rückzug der Kolbenstange die Kupplungsanordnung mit einer weiteren Vertiefung in Eingriff bringbar ist und erneut eine Antriebsverbindung zwischen der Zug-/Schubeinheit 16 und dem Gestängeelement 22 herstellbar ist.

In Figur 4 ist der Ausschnitt A nach Figur 3 mit der Vertiefung 26 vergrößert dargestellt. Die Flanken 32, 34 der Vertiefung 26 sind als Schrägen ausgeführt und haben jeweils einen Schnittwinkel α mit der Mittelachse 30 des Gestängeelements 22. Im vorliegenden Ausführungsbeispiel ist der Winkel α 45°. Die Flanken 32, 34 sind spiegelsymmetrisch zur Ebene 36 angeordnet. Die Mittelachse 30 schneidet die Ebene 36 orthogonal.

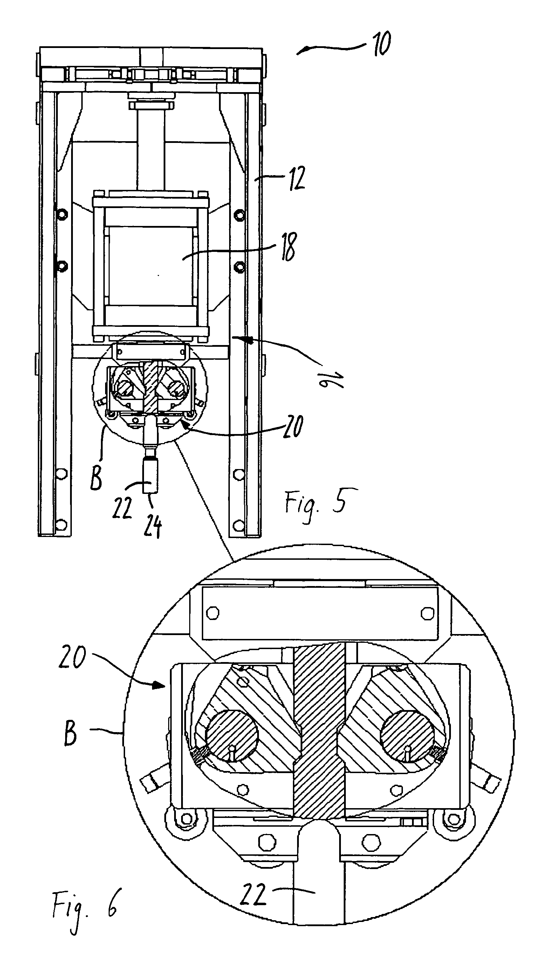

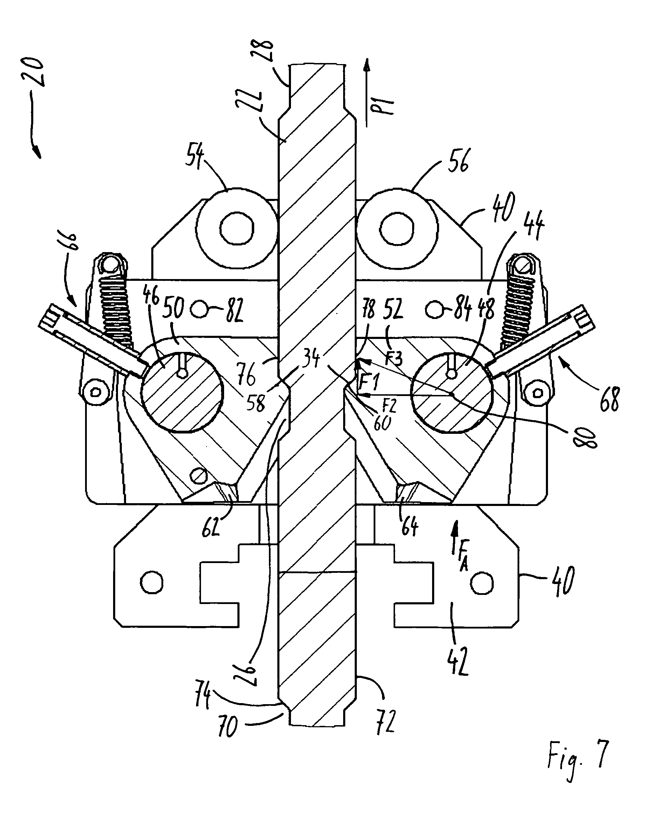

In Figur 5 ist eine Draufsicht auf die Vorrichtung 10 gezeigt. Der in Figur 5 mit B gekennzeichnete Ausschnitt ist in Figur 6 vergrößert dargestellt. Die Kupplungsanordnung 20 ist in den Figuren 5 und 6 teilgeschnitten dargestellt. Die Mittelachse 30 des Gestängeelements 22 liegt in der Schnittebene, sodass ein Längsschnitt eines Abschnitts des Gestängeelements 22 gezeigt ist. Der konkrete Aufbau und die Wirkungsweise der Kupplungsanordnung 20 wird nachfolgend in Verbindung mit den Figuren 7 bis 23 an mehreren Ausführungsformen noch näher erläutert.

Figur 7 zeigt eine Kupplungsanordnung 20 gemäß einer ersten Ausführung der Erfindung ohne die in den Figuren 5 und 6 teilgeschnitten dargestellte Abdeckung. Die Kupplungsanordnung 20 hat ein Grundelement 40, das über einen Anschlussbereich 42 mit dem Ende der Kolbenstange des Arbeitszylinders 18 verbindbar ist, wie in den Figuren 1, 2, 5 und 6 dargestellt. Mit dem Grundelement 40 ist eine Führungsplatte 44 fest verbunden, aus der zwei Zapfen 46, 48 hervorstehen, um die jeweils eine Kupplungsbacke 50, 52 schwenkbar gelagert ist, sodass die Zapfen 46, 48 die Drehachsen der Kupplungsbacken 50, 52 festlegen. Das Gestängeelement 22 ist vorzugsweise rotationssymmetrisch und liegt mit seiner Unterseite auf der Führungsplatte 44 im Bereich zwischen den Kupplungsbacken 50, 52 auf. Zwei Führungsrollen 54, 56 sind drehbar mit dem Grundelement 40 verbunden und kontaktieren das Gestängeelement 22 an dessen Mantelfläche, sodass die Lage des Gestängeelements 22 zum Grundelement 40 und somit zur Führungsplatte 44 und den Kupplungsbacken 50, 52 festgelegt ist. Mindestens eine der Führungsrollen 54, 56 kann mit einer Federkraft beaufschlagt sein, durch die die Rolle 54, 56 gegen die Mantelfläche des Gestängeelements 22 gedrückt wird.

Die erste Kupplungsbacke 50 hat einen ersten Eingriffsbereich 58 und einen zweiten Eingriffsbereich 62. Die zweite Kupplungsbacke 52 hat einen ersten Eingriffsbereich 60 und einen zweiten Eingriffsbereich 64. In Figur 7 sind die Kupplungsbacken 50, 52 über jeweils eine Hebel-Federanordnung 66, 68 so voreingestellt, dass die Kupplungsbacken 50, 52 mit ihren ersten Eingriffsbereichen 58, 60 in die Vertiefung 26 des Gestängeelements 22 hineingedrückt werden, sodass die ersten Eingriffsbereiche 58, 60 der Kupplungsbacken 50, 52 durch eine von der Kolbenstange des Arbeitszylinders 18 auf das Grundelement 40 ausgeübten Antriebskraft F_{A} die Flanke 34 der Vertiefung 26 kontaktieren. Bei der Darstellung gemäß Figur 7 kontaktieren die ersten Eingriffsbereiche 50, 60 bereits die Flanke 34 der Vertiefung 26. Nach einem entsprechenden Vorschub des Gestängeelements 22 in der durch den Pfeil P 1 angegebenen ersten Antriebsrichtung und nach einem Rückzug der Kupplungsanordnung 20 rasten die Kupplungsbacken 50, 52 in die Vertiefung 70 eines mit dem Gestängeelement 22 verbundenen Gestängeelements 72 ein und kontaktieren die Flanke 74 der Vertiefung 70.

Bei einem Kontakt der ersten Eingriffsbereiche 58, 60 der Kupplungsbacken 50, 52 mit der Flanke 34 der Vertiefung wird die Antriebskraft F_{A} über das Grundelement 40, die Führungsplatte 44 und die Zapfen 46, 48 in die Kupplungsbacken 50, 52 eingeleitet. Für die Kupplungsbacke 52 ist in Figur 7 ein Kräftedreieck eingefügt, wobei die Kraft F₁ dabei die halbe von der Kolbenstange auf das Grundelement 40 übertragene Antriebskraft F_{A}, die Kraft F₂ die durch den Eingriff des Eingriffsbereichs 60 der Kupplungsbacke 52 bewirkte Anpresskraft und die Kraft F₃ die aus der Anpresskraft F₂ und der Kraft F₁ resultierende auf das Gestängeelement 22 übertragene Kraft ist.

Im Ausführungsbeispiel nach Figur 7 bilden die ersten Eingriffsbereiche 58, 60 jeweils einen ersten Kontaktbereich und die mit den Bezugszeichen 76, 78 bezeichneten Bereiche jeweils einen zweiten Kontaktbereich. Über die zweiten Kontaktbereiche 76, 78 wird eine der Kraft F₂ entgegengesetzt gerichtete Anpresskraft auf die von den zweiten Kontaktbereichen 76, 78 kontaktiere Umfangsfläche des Gestängeelements 22 ausgeübt. Abhängig von dem Abstand der durch den Zapfen 48 festgelegten Drehachse 80 der Kupplungsbacke 52 kann das Kräfteverhältnis von Antriebskraft F_{A} und Anpresskraft F₂ festgelegt werden. Somit kann auch durch eine Verschiebung der Drehachse 80 und der durch den Zapfen 46 festgelegten Drehachse das Kräfteverhältnis zwischen Antriebskraft F_{A} und Anpresskraft einfach eingestellt werden. In der Führungsplatte 44 sind insgesamt vier Löcher zur Aufnahme von Begrenzungsstiften 82, 84 vorgesehen. In zwei dieser Löcher sind Begrenzungsstifte 82, 84 eingesetzt, die aus der Führungsplatte 44 herausstehen und die die Drehbewegung der Kupplungsbacken 50, 52 um die Zapfen 46, 48 begrenzen. Dadurch wird ein ungewolltes Umsteuern der Antriebsrichtung der Kupplungsanordnung 20 auf einfache Art und Weise verhindert.

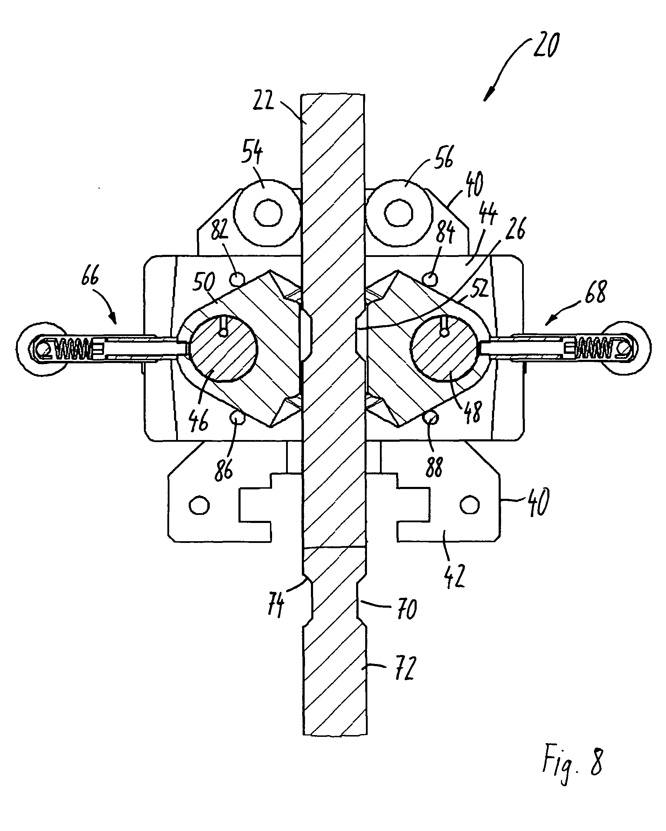

In Figur 8 ist die Kupplungsanordnung 20 nach Figur 7 gemäß der ersten Ausführungsform der Erfindung gezeigt. Im Unterschied zu Figur 7 sind die Kupplungsbacken 50, 52 in einer Neutralstellung dargestellt, in der die Kupplungsanordnung 20 nicht im Eingriff mit dem Gestängeelement 22 steht und das Gestängeelement 22 somit frei relativ zu der Kupplungsanordnung 20 bewegt werden kann. In dieser Neutralstellung können insbesondere die ersten Gestängeelemente 22 in die Vorrichtung eingesetzt werden. Um die Kupplungsbacken 50, 52 in dieser Position zu halten, werden in die bereits im Zusammenhang mit Figur 7 erwähnten Löcher in der Führungsplatte 44 vier Begrenzungsstifte 82 bis 88 eingesetzt, die eine Drehbewegung der Kupplungsbacken 50, 52 um die Zapfen 46, 48 im Wesentlichen verhindern. Beim Rückzug der Kupplungsanordnung relativ zu dem Gestängeelement 22 sind die Kupplungsbacken 50, 52 durch die Feder-Hebelanordnungen 66, 68 noch vorgespannt und werden beim Rückzug der Kupplungsanordnung 20 entgegen der ersten Antriebsrichtung P1 über die der Flanke 34 gegenüberliegende Flanke 36 der Vertiefung 26 aus der Vertiefung 26 herausgedrückt, sodass jeweils nur die dem Gestängeelement 22 zugewandte Kante des ersten Eingriffsbereichs durch die Federkraft der Feder-Hebelanordnungen 66, 68 gegen die Umfangsfläche des Gestängeelements 22 gedrückt wird. Dabei haben die Kupplungsbacken 50, 52 etwa die in Figur 8 dargestellte Neutralposition. Durch die Vorspannung der Feder-Hebelanordnungen 66, 68 werden die Kupplungsbacken 50, 52 dann bei einer weiteren Bewegung entgegen der ersten Antriebsrichtung P 1 in die nachfolgende Vertiefung 70 gedrückt. Bei einer anschließenden Richtungsumkehr der Antriebsrichtung des Arbeitszylinders werden die ersten Eingriffsbereiche 58, 60 der Kupplungsbacken 50, 52 gegen die zur Flanke 34 parallele Flanke 74 der Vertiefung 70 gedrückt.

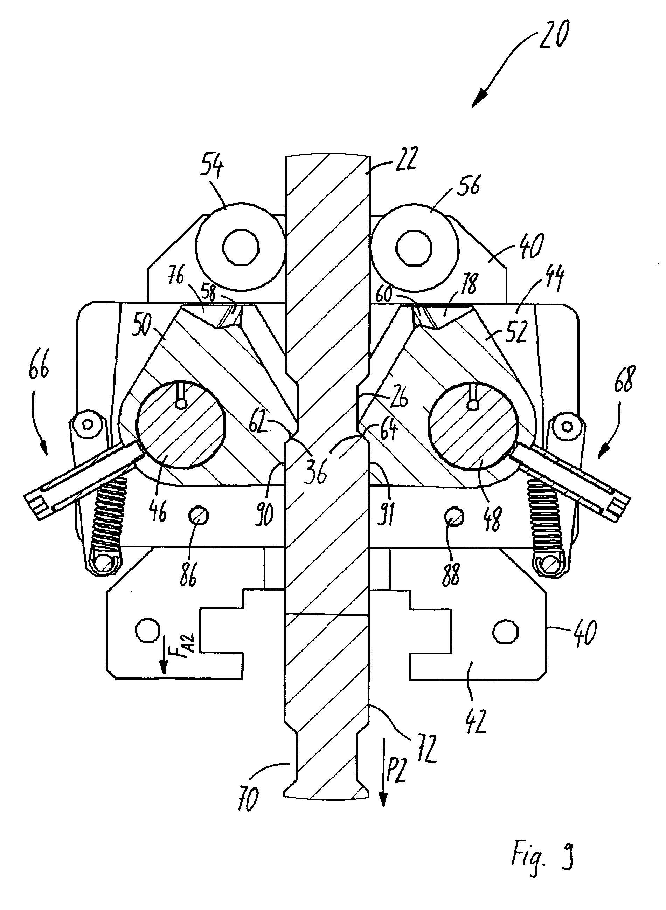

In Figur 9 ist die Kupplungsanordnung 20 gemäß der ersten Ausführungsform nach den Figuren 7 und 8 gezeigt. Über die Feder-Hebelanordnungen 66, 68 ist die Kupplungsanordnung 20 so voreingestellt, dass die zweiten Eingriffsbereiche 62, 64 der Kupplungsbacken 50, 52 mit der der Flanke 34 gegenüberliegenden Flanke 36 der Vertiefung 26 in Kontakt gebracht werden, wodurch bei einer durch den Arbeitszylinder 18 bewirkten Antriebskraft F_{A2} eine Bewegung der Gestängeelemente 22, 70 in einer zweiten Antriebsrichtung P2 bewirkt wird. Sowohl der Eingriff der zweiten Eingriffsbereiche 62, 64 als auch das Erzeugen der Anpresskraft über Kontaktbereiche 90, 91 erfolgt in gleicher Weise wie für die erste Antriebsrichtung P 1 beschrieben worden ist.

Mit Hilfe des Arbeitszylinders 18 wird sowohl bei der voreingestellten ersten Antriebsrichtung P 1 als auch bei der voreingestellten zweiten Antriebsrichtung P2 eine Hin- und Herbewegung der Kupplungsanordnung 20 erzeugt, wobei durch die Umsteuerung der Kupplungsbacken 50, 52 mit Hilfe der Feder-Hebelanordnungen 66, 68 die Richtung voreingestellt wird, in der das Gestängeelement 22 von den Kupplungsbacken 50, 52 geklemmt und in welcher das Gestängeelement 22 relativ zur Kupplungsanordnung frei bewegbar ist bzw. in welcher die Kupplungsanordnung 20 relativ zum Gestängeelement 22 frei bewegbar ist.

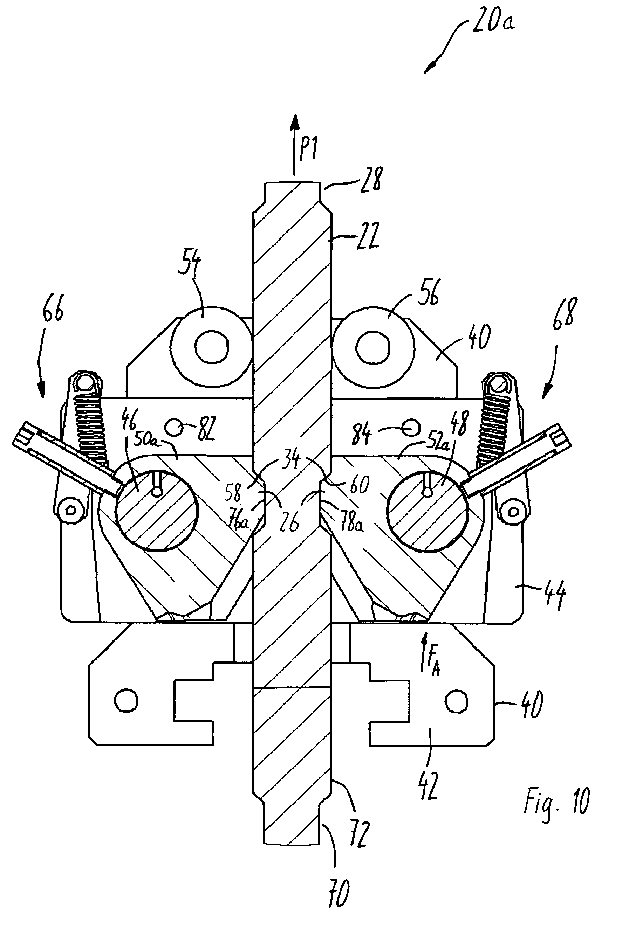

In Figur 10 ist eine Kupplungsanordnung 20a gemäß einer zweiten Ausführungsform der Erfindung dargestellt. Die mit dem ersten Ausführungsbeispiel übereinstimmenden konstruktiven Elemente der Kupplungsanordnung 20a sind mit denselben Bezugszeichen gekennzeichnet. Unterschiedliche Elemente mit entsprechender Funktion sind mit der Bezugszeichenziffer der ersten Ausführungsform nach den Figuren 7 bis 9 und zusätzlich mit einem von der weiteren Ausführungsform abhängigen Kleinbuchstaben a bis e gekennzeichnet.

Bei der Kupplungsanordnung 20a nach Figur 10 sind die Kupplungsbacken 50a, 52a mit Hilfe der Feder-Hebelanordnungen 66, 68 zum Antrieb des Gestängeelements 22 in die erste Antriebsrichtung P 1 voreingestellt. Im Unterschied zu den Kupplungsbacken 50, 52 haben die Kupplungsbacken 50a, 52a zweite Kontaktbereiche 76a, 78a, die eine Anpresskraft auf den Vertiefungsgrund ausüben, wenn die jeweilige Kupplungsbacke 50a, 52a durch den Kontakt des ersten Eingriffsbereichs 58, 60 um den jeweiligen Zapfen 46, 48 gedreht wird.

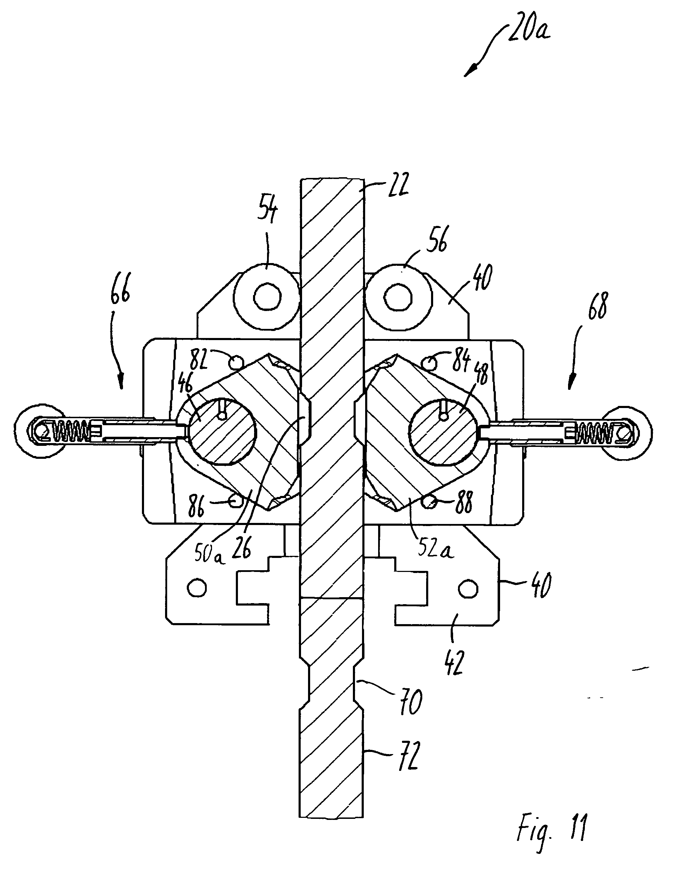

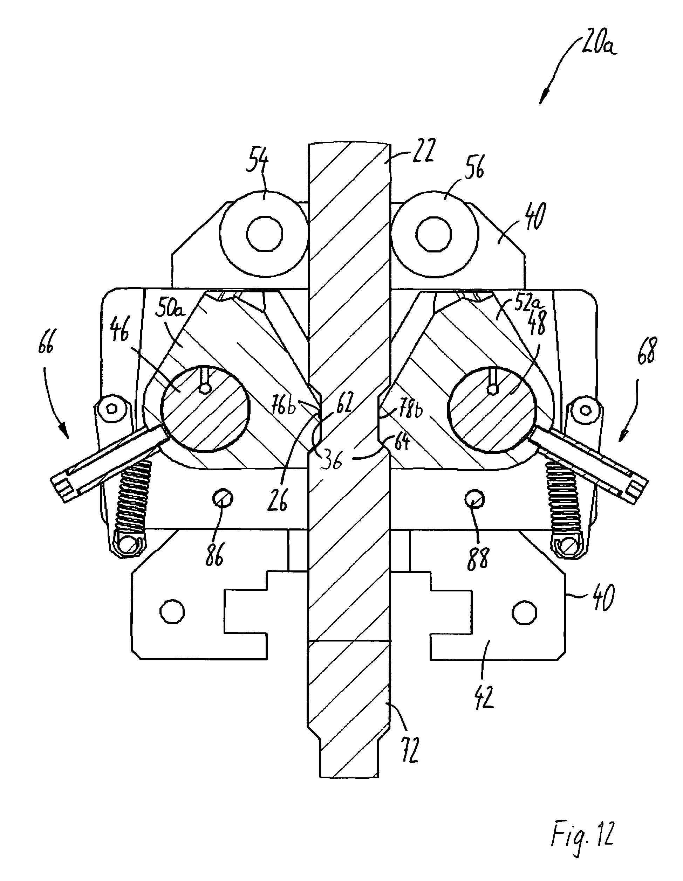

In Figur 11 ist die Kupplungsanordnung 20a mit einer Neutralstellung der Kupplungsbacken 50a, 52a dargestellt. In Figur 12 ist die Kupplungsanordnung 20a mit einer Voreinstellung der Kupplungsbacken 50a, 52a zur Bewegung der Gestängeelemente 22, 70 in Antriebsrichtung P2 gezeigt.

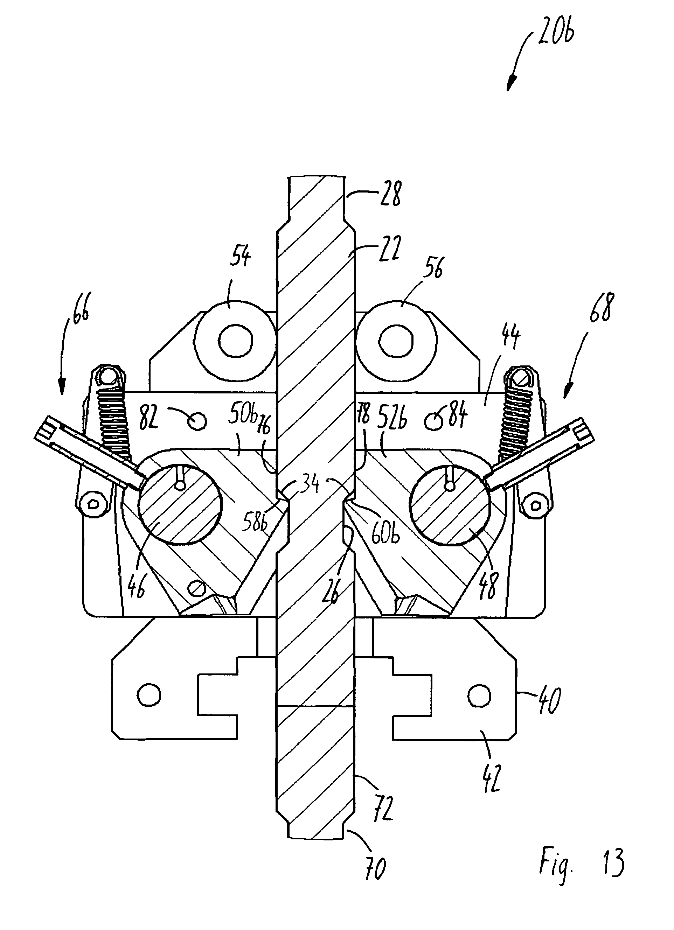

Bei dem ersten Ausführungsbeispiel nach den Figuren 7 bis 9 und bei dem zweiten Ausführungsbeispiel nach den Figuren 10 bis 12 bilden die Eingriffsbereiche 58 bis 62 jeweils einen Kontaktbereich zum flächigen Kontakt mit der Flanke 34 der Vertiefung 26. In Eingriffsstellung der Kupplungsbacken 50, 50a, 52, 52a sind dabei zumindest Flächenbereiche des jeweiligen Eingriffsbereichs 58, 60 parallel zu Flächenbereichen der Flanke 34 ausgerichtet. Die Flanke 34 hat vorzugsweise einen Schnittwinkel mit der Mittelachse 30 des Gestängeelements 22 von 45°. In Eingriffsstellung haben die ersten Eingriffsbereiche 58, 60 denselben Schnittwinkel mit der Längsachse des Gestängeelements 22 von 45°. Bei den nachfolgenden Ausführungsformen, die im Zusammenhang mit den Figuren 13 bis 16 erläutert werden, haben die Eingriffsbereiche 58, 60 in Eingriffsstellung der Kupplungsbacken 50, 50a, 52, 52a und die Flanke 34 voneinander verschiedene Schnittwinkel mit der Mittelachse 30. Dadurch kontaktiert die jeweilige Kupplungsbacke 50b bis 50d die Flanke 34 nur in einem Kontaktbereich, der kleiner als die Eingriffsbereiche 58, 60 ist. Vorzugsweise wird der Kontaktbereich nur durch eine Kontaktlinie gebildet.

Bei der Kupplungsanordnung 20b gemäß der dritten Ausführungsform der Erfindung nach Figur 13 ist der Schnittwinkel des Eingriffsbereichs mit der Mittelachse 30 des Gestängeelements 22 größer als der Schnittwinkel der Flanke 34 mit der Mittelachse 30. Dadurch ist der Kontaktbereich des Eingriffsbereichs 58b, 60b nahe dem oder am Vertiefungsgrund der Vertiefung 26 angeordnet. Bei der Kupplungsanordnung 20b gemäß der vierten Ausführungsform der Erfindung wird somit eine erste Vorschubkraft über diesen relativ kleinen Kontaktbereich der Eingriffsbereiche 58b und 60b auf das Gestängeelement 22 übertragen und dadurch eine Drehung der Kupplungsbacken 50b, 52b bewirkt. In gleicher Weise wie im Zusammenhang mit der ersten Ausführungsform nach den Figuren 7 bis 9 erläutert, wird dadurch eine Anpresskraft in den Kontaktbereichen 76, 78 von den Kupplungsbacken 50b, 52b auf das Gestängeelement 22 ausgeübt.

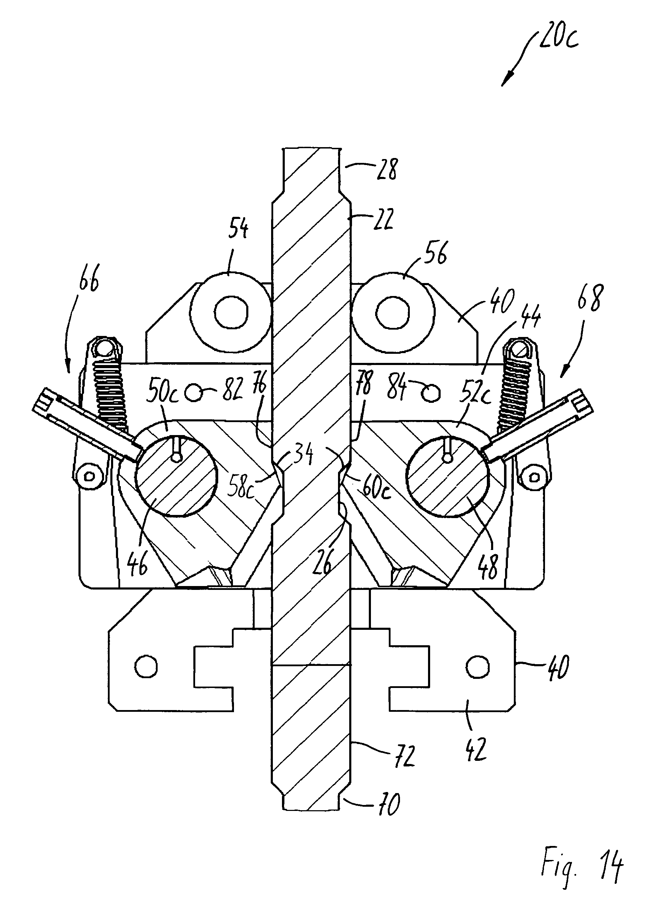

In Figur 14 ist eine Kupplungsanordnung 20c gemäß einer vierten Ausführungsform der Erfindung gezeigt, bei der die Kupplungsbacken 50c und 52c für eine Bewegung des Gestänges in die erste Antriebsrichtung P1 voreingestellt sind. Bei der Kupplungsanordnung 20c nach Figur 14 ist der Schnittwinkel des Eingriffsbereichs 58c, 60c mit der Mittelachse 30 des Gestängeelements 22 größer als der Schnittwinkel der Flanke 34 mit der Mittelachse 30 des Gestängeelements 22. Dadurch ist der Kontaktbereich des Eingriffsbereichs 58c, 60c nahe dem äußeren Umfang des Gestängeelements und der Vertiefung 26 angeordnet. Bei der Kupplungsanordnung 20c gemäß der vierten Ausführungsform der Erfindung wird somit eine erste Vorschubkraft über diesen Kontaktbereich der Eingriffsbereiche 58c und 60c auf das Gestängeelement 22 übertragen und dadurch eine Drehung der Kupplungsbacken 50c, 52c bewirkt. In gleicher Weise wie im Zusammenhang mit der ersten Ausführungsform nach den Figuren 7 bis 9 erläutert, wird dadurch eine Anpresskraft in den Kontaktbereichen 76, 78 von den Kupplungsbacken 50c, 52c auf das Gestängeelement 22 ausgeübt.

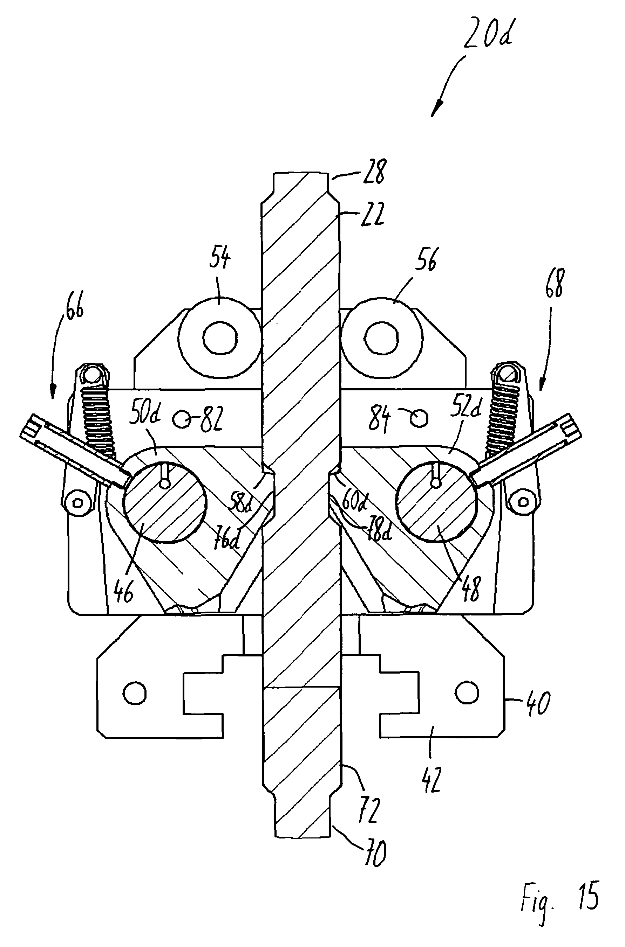

In Figur 15 ist eine Kupplungsanordnung 20d gemäß einer fünften Ausführungsform der Erfindung gezeigt, bei der die Kupplungsbacken 50d und 52d für eine Bewegung des Gestänges in die erste Antriebsrichtung P1 voreingestellt sind. Bei der Kupplungsanordnung 20d nach Figur 15 ist der Schnittwinkel des Eingriffsbereichs 58d, 60d mit der Mittelachse 30 des Gestängeelements 22 größer als der Schnittwinkel der Flanke 34 mit der Mittelachse 30. Dadurch ist der Kontaktbereich des Eingriffsbereichs 58d, 60d nahe dem Vertiefungsgrund der Vertiefung 26 angeordnet. Bei der Kupplungsanordnung 20c gemäß der fünften Ausführungsform der Erfindung wird somit eine erste Vorschubkraft über diesen Kontaktbereich der Eingriffsbereiche 58d und 60d auf das Gestängeelement 22 übertragen und dadurch eine Drehung der Kupplungsbacken 50d, 52d bewirkt, sodass in gleicher Weise wie im Zusammenhang mit der zweiten Ausführungsform nach den Figuren 10 bis 12 beschrieben, eine Anpresskraft in den Kontaktbereichen 76d, 78d von den Kupplungsbacken 50d, 52d auf das Gestängeelement 22 in der Vertiefung 26 ausgeübt wird.

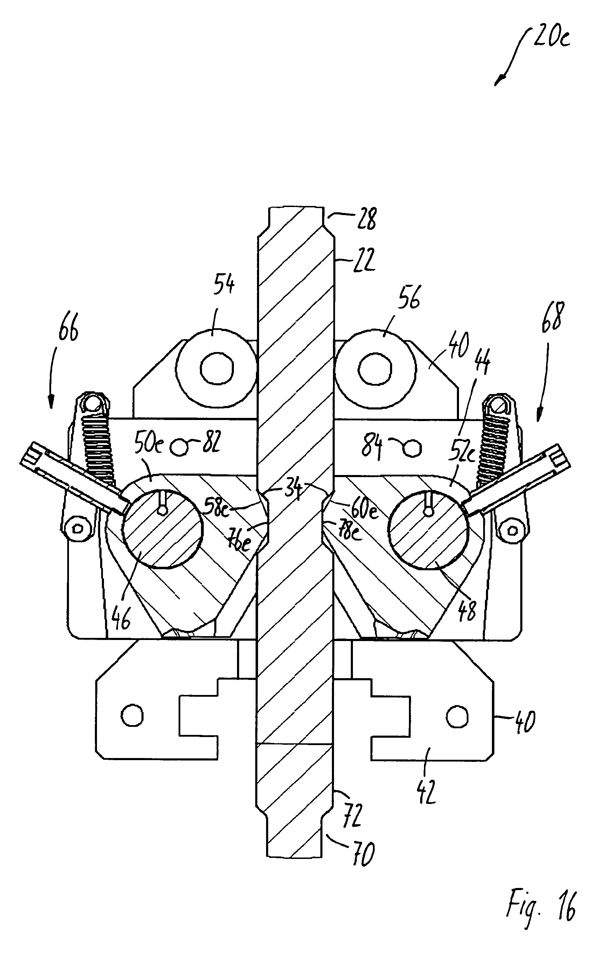

In Figur 16 ist eine Kupplungsanordnung 20e gemäß einer sechsten Ausführungsform der Erfindung gezeigt, bei der die Kupplungsbacken 50e und 52e für eine Bewegung des Gestänges in die erste Antriebsrichtung P1 voreingestellt sind. Bei der Kupplungsanordnung 20e nach Figur 16 ist der Schnittwinkel des Eingriffsbereichs 58e, 60e mit der Mittelachse 30 des Gestängeelements 22 größer als der Schnittwinkel der Flanke 34 mit der Mittelachse 30. Dadurch ist der Kontaktbereich des Eingriffsbereichs 58e, 60e nahe dem äußeren Umfang des Gestängeelements 22 am Rand der Vertiefung 26 angeordnet. Bei der Kupplungsanordnung 20e gemäß der sechsten Ausführungsform der Erfindung wird somit eine erste Vorschubkraft über diesen Kontaktbereich der Eingriffsbereiche 58e und 60e auf das Gestängeelement 22 übertragen und dadurch eine Drehung der Kupplungsbacken 50e, 52e bewirkt, sodass in gleicher Weise wie im Zusammenhang mit der ersten Ausführungsform nach den Figuren 7 bis 9 beschrieben, eine Anpresskraft in den Kontaktbereichen 76e, 78e von den Kupplungsbacken 50c, 52c auf das Gestängeelement 22 ausgeübt wird.

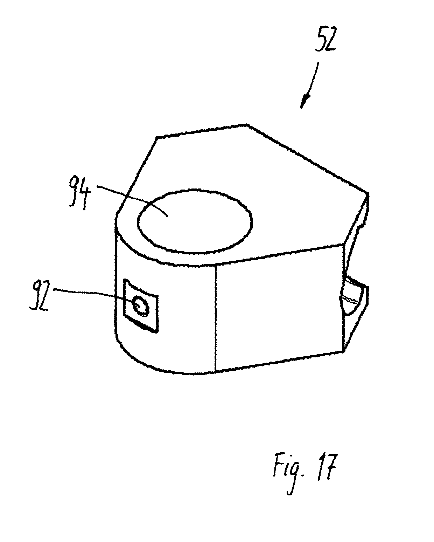

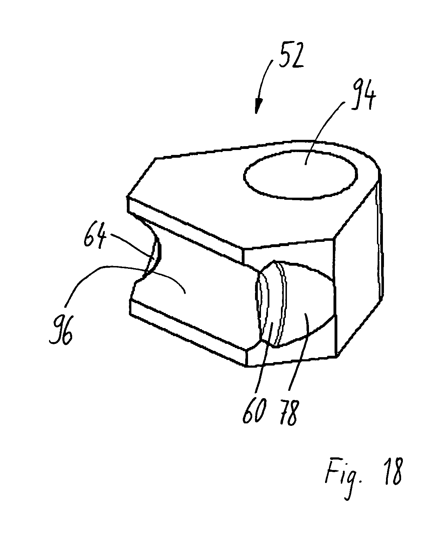

In Figur 17 ist eine erste perspektivische Darstellung und in Figur 18 eine zweite perspektivische Darstellung der Kupplungsbacke 52 gemäß der ersten Ausführungsform der Erfindung dargestellt. Die Feder-Hebelanordnung 68 wird über einen Befestigungspunkt 92 wird mit der Kupplungsbacke 52 verbunden. In eine Öffnung 94 wird der Zapfen 48 eingeführt. Der erste Eingriffsbereich 60 kontaktiert die Flanke 34 des Gestängeelements 22 über einem Winkelbereich von etwa 90°. Der Kontaktbereich 78 ist gegenüber dem Eingriffsbereich 60 um 45° abgewinkelt, sodass sich eine auf der Oberfläche des Eingriffsbereichs 60 verlaufende Gerade mit einer auf der Oberfläche des Kontaktbereichs 78 verlaufenden Gerade in einem Schnittwinkel von 45° schneiden. Der Bereich 96 liegt in Neutralstellung nach Figur 8 dem Gestängeelement 22 gegenüber.

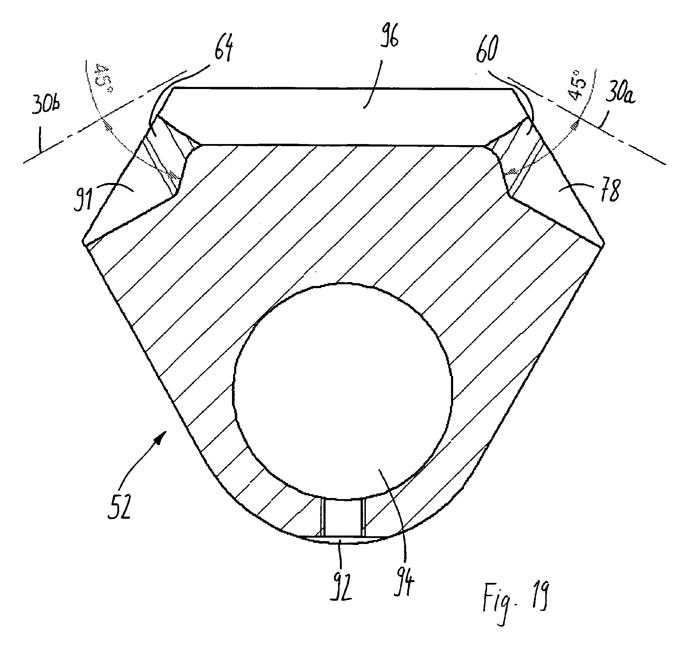

Figur 19 zeigt einen Längsschnitt durch die Kupplungsbacke 52. Die Strichpunktlinie 30a gibt den Verlauf der Mittelachse 30 des Gestängeelements 22 bei relativ zu einer ersten Lage der Kupplungsbacke 52 nach

Figur 7 und die Strichpunktlinie 30b gibt die Lage der Mittellinie 30 des Gestängeelements 22 bei einer zweiten Lage der Kupplungsbacke 52 nach

Figur 9 an. Der Schnittwinkel zwischen der durch die Strichpunktlinien 30a, 30b angegebenen Mittelachse 30 und dem jeweiligen Eingriffsbereich 60, 64 beträgt 45°.

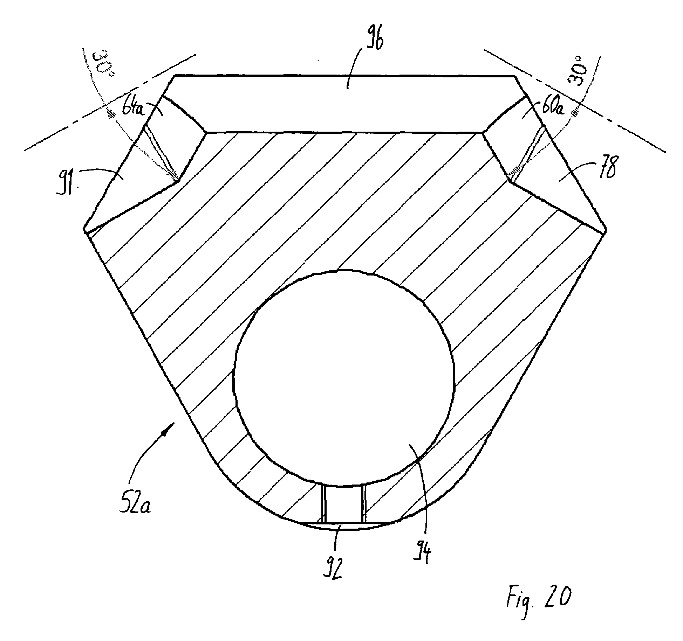

Figur 20 zeigt eine Schnittdarstellung einer ersten Kupplungsbacke 52b gemäß der dritten Ausführungsform der Erfindung. Der Schnittwinkel zwischen der durch die Strichpunktlinien 30a, 30b angegebenen Mittelachse 30 und dem jeweiligen Eingriffsbereich 60b, 64b beträgt 30°.

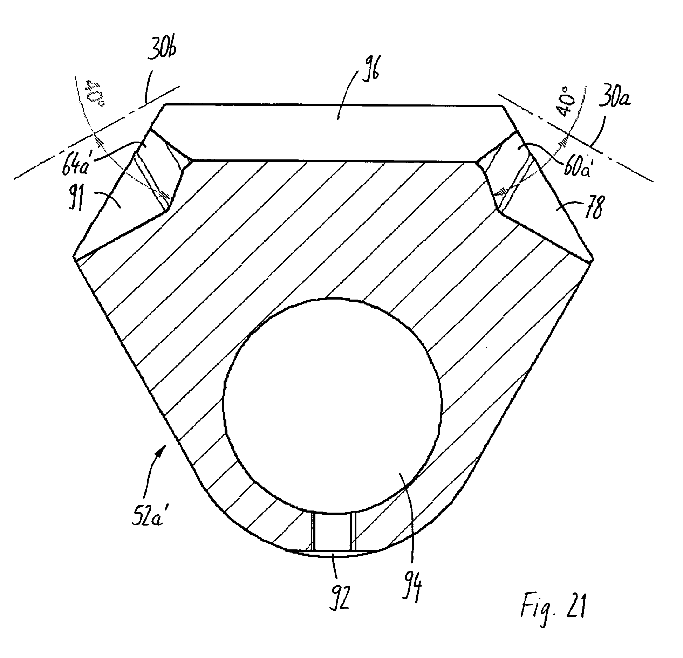

Figur 21 zeigt eine geschnittene Darstellung einer alternativen zweiten Kupplungsbacke 52b gemäß der dritten Ausführungsform der Erfindung. Bei dieser alternativen zweiten Kupplungsbacke 52b betragen die Schnittwinkel α jeweils 40°.

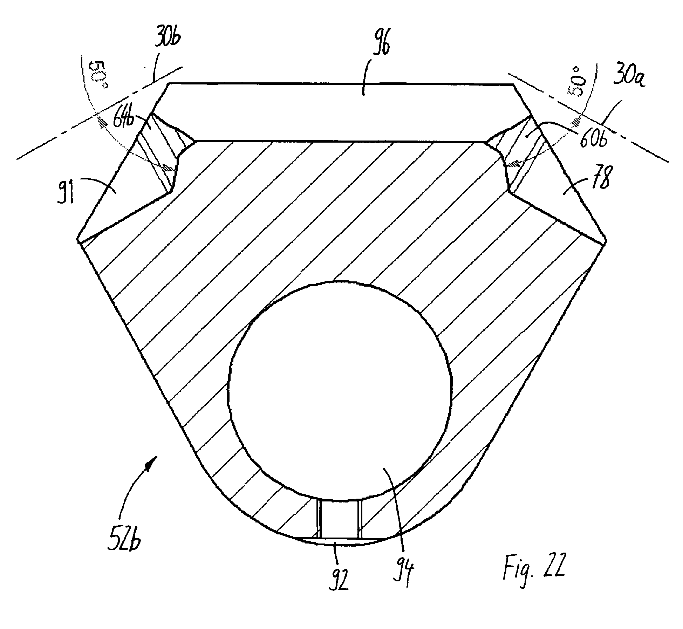

Figur 22 zeigt eine geschnittene Darstellung einer ersten Kupplungsbacke 52c der vierten Ausführungsform der Erfindung. Der Schnittwinkel zwischen der durch die Strichpunktlinien 30a, 30b angegebenen Mittelachse 30 und dem jeweiligen Eingriffsbereich 60c, 64c beträgt 50°.

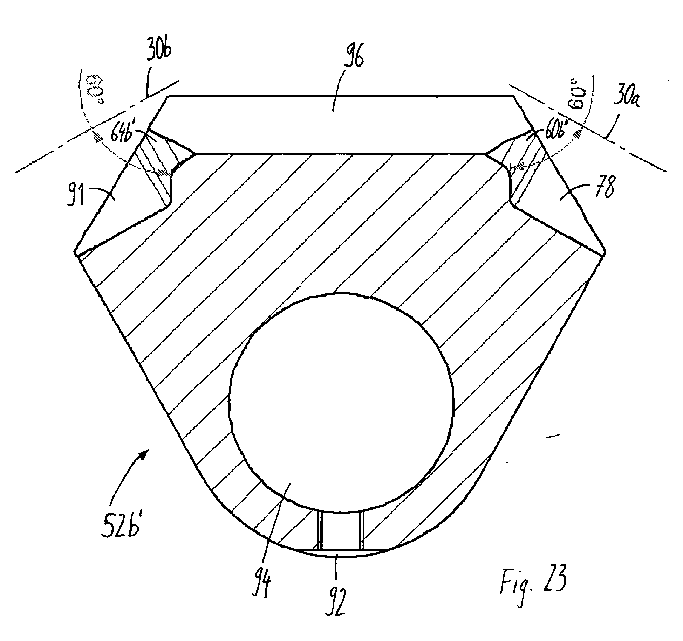

Figur 23 zeigt eine geschnittene Darstellung einer alternativen zweiten Kupplungsbacke 52c gemäß der vierten Ausführungsform der Erfindung. Bei dieser alternativen zweiten Kupplungsbacke 52c betragen die Schnittwinkel α jeweils 60°.

Abweichend von den in den Ausführungsbeispielen gezeigten Gestängeelementen 22, 72 können diese auch als Zahnstange, als Gestängeelemente mit leiterartig angeordneten Eingriffselementen und/oder als Gelenkkette ausgebildet sein und können formschlüssig oder kraftschlüssig miteinander verbindbar sein, sodass ein schubsteifes aus Gestängeelementen zusammengesetztes Gestänge erzeugbar ist.

Weiterhin können bei der Erfindung mindestens ein Kontaktbereich, 76, 78 zum Kontaktieren der Mantelfläche des Gestänges 22 außerhalb der Vertiefung 26, 28, 70 und/oder nicht im Bereich des Vorsprungs sowie ein zweiter Kontaktbereich 76a, 78a zum Kontaktieren des Gestänges 22 im Bereich der Vertiefung 26, 28, 70 und/oder im Bereich des Vorsprungs. Durch diese Maßnahme kann das Kupplungsmittel 50, 50a bis 50e, 52, 52a bis 52e an mehreren Kontaktbereichen 76, 76a, 76a', 78, 78a, 78a' gegen das Gestänge 22, 72 gedrückt werden. Ferner ist es bei der erfindungsgemäßen Vorrichtung 10 und dem erfindungsgemäßen Verfahren vorteilhaft, wenn die Anpresskraft, mit der der zweite Kontaktbereich 76, 76a, 76a', 78, 78a, 78a' gegen das Gestänge 22 gedrückt wird, größer ist als die Gewichtskraft des Kupplungsmittels 50, 50a bis 50e, 52, 52a bis 52e. Dadurch ist es möglich, tatsächlich eine kraftschlüssige Verbindung zwischen dem Kupplungsmittel 50, 50a bis 50e, 52, 52a bis 52e und dem Gestänge 22, 72 herzustellen und die Baugröße des Kupplungsmittels 50, 50a bis 50e, 52, 52a bis 52e relativ gering zu halten.

### Bezugszeichenliste

- 10: Vorrichtung
- 12: Rahmen
- 14: Frontplatte
- 16: Zug-/Schubeinheit
- 18: Arbeitszylinder
- 20, 20a bis 20e: Kupplungsanordnung
- 22,72: Gestängeelement
- 24: Kupplungsbereich
- 26, 28,70: Vertiefung
- 30: Mittelachse
- 30a, 30b: Positionen der Mittelachse 30
- 32, 34,74: Flanke
- 36: Symmetrieebene der Vertiefung 26
- 40: Grundelement
- 42: Anschlussbereich
- 44: Führungsplatte
- 46, 48: Zapfen
- 50, 50a, 50b, 50c, 50d, 50e: erste Kupplungsbacke
- 52, 52a, 52b, 52c, 52d, 52e: zweite Kupplungsbacke
- 54, 56: Führungsrollen
- 58, 60: erster Eingriffsbereich
- 62, 64: zweiter Eingriffsbereich
- 66, 68: Feder-Hebelanordnung
- 76, 76a, 76a', 78, 78a, 78a', 90, 91: Kontaktbereich
- 80: Drehachse
- 82, 84, 86, 88: Begrenzungsstift
- 92: Befestigungspunkt
- 94: Öffnung
- F_{A}, F_{A}2, F₁, F₂, F₃: Kräfte
- P 1: erste Antriebsrichtung
- P2: zweite Antriebsrichtung

## Patentansprüche

1. Vorrichtung zum Bewegen eines Arbeitsmittels im Erdreich,
mit einer Zug-/Schubeinheit (16) zum Erzeugen einer linearen Bewegung eines mindestens einen Vorsprung und/oder mindestens eine Ausnehmung (26, 28, 70) aufweisenden Gestänges (22, 72), mit mindestens einem um eine Drehachse (80) drehbares Kupplungsmittel (50, 50a bis 50e, 52, 52a bis 52e) zum Erzeugen einer Antriebsverbindung zwischen der Zug-/Schubeinheit (16) und dem Gestänge (22, 72),
wobei das Kupplungsmittel (50, 50a bis 50e, 52, 52a bis 52e) mit dem Vorsprung und/oder der Ausnehmung (26, 28, 70) des Gestänges (22, 72) derart im Eingriff bringbar ist, dass das Kupplungsmittel (50, 50a bis 50e, 52, 52a bis 52e) über einen ersten Kontaktbereich (58, 58b, 58c, 60, 60b, 60c, 62, 64) des Kupplungsmittels (50, 50a bis 50e, 52, 52a bis 52e) eine erste Vorschubkraft von der Zug-/Schubeinheit (16) auf das Gestänge (22, 72)überträgt, **dadurch gekennzeichnet dass** die der ersten Vorschubkraft entgegengerichtete Gegenkraft ein auf das Kupplungsmittel (50, 50a bis 50e, 52, 52a bis 52e) wirkendes Drehmoment erzeugt, das einen zweiten Kontaktbereich (76, 76a, 76a', 76d, 76e, 78, 78a, 78a', 78d, 78e, 90, 91) des Kupplungsmittels (50, 50a bis 50e, 52, 52a bis 52e) mit einer Anpresskraft gegen das Gestänge (22, 72) drückt,
wobei das Kupplungsmittel (50, 50a bis 50e, 52, 52a bis 52e) durch die Anpresskraft eine kraftschlüssige Verbindung zwischen der Zug-/Schubeinheit (16) und dem Gestänge (22, 72) herstellt und über diese kraftschlüssige Verbindung eine zweite Vorschubkraft auf das Gestänge (22, 72) überträgt, und
wobei zumindest ein Teil der auf das Gestänge (22, 72) wirkenden ersten und zweiten Vorschubkraft die linearere Bewegung des Gestänges (22, 72) bewirkt.

2. Vorrichtung nach Anspruch 1, **dadurch gekennzeichnet, dass** die Zug-/Schubeinheit (16) druckmittelbetrieben ist und mindestens einen Arbeitszylinder (18) und einen Kolben mit einer Kolbenstange umfasst, und dass die Kolbenstange oder der Arbeitszylinder (18) mit einer das Kupplungsmittel umfassenden Kupplungsanordnung (20, 20a bis 20e) verbunden ist und diese relativ zu einem Rahmen (12) der Vorrichtung (10) bewegen.

3. Vorrichtung nach Anspruch 2, **dadurch gekennzeichnet, dass** der Arbeitszylinder (18) und die Kolbenstange einen Kanal zum Durchtritt des Gestänges (22, 72) haben.

4. Vorrichtung nach einem der vorhergehenden Ansprüche, **dadurch gekennzeichnet, dass** die lineare Bewegung des Gestänges (22, 72) eine Zugbewegung oder eine Schubbewegung eines mit einem Endbereich des Gestänges (22, 72) verbundenen Arbeitsmittels erzeugt.

5. Vorrichtung nach einem der vorhergehenden Ansprüche, **dadurch gekennzeichnet, dass** eine das Kupplungsmittel (50, 50a bis 50e, 52, 52a bis 52e) umfassende Kupplungsanordnung (20, 20a bis 20e) als automatische Kupplungsanordnung (20, 20a bis 20e) ausgebildet ist, die in einer Arbeitsrichtung der Zug-/Schubeinheit (16) das Gestänge (22, 72) klemmt und in der entgegengesetzten Richtung frei relativ zum Gestänge (22, 72) bewegbar ist.

6. Vorrichtung nach Anspruch 5, **dadurch gekennzeichnet, dass** die Arbeitsrichtung der Kupplungsanordnung (20, 20a bis 20e) durch ein Umsteuern des Kupplungsmittels (50, 50a bis 50e, 52, 52a bis 52e) umkehrbar ist.

7. Vorrichtung nach einem der vorhergehenden Ansprüche, **dadurch gekennzeichnet, dass** das Gestänge (22, 72) mehrere Ausnehmungen jeweils als umlaufende Nuten (26, 28, 70) oder umlaufende Vorsprünge hat, wobei der Abstand zweier benachbarter Ausnehmungen (26, 28, 70) bzw. Vorsprünge kleiner oder gleich der Länge einer in einem Arbeitsschritt durch die Zug-/Schubeinheit (16) erzeugbaren linearen Bewegung ist.

8. Vorrichtung nach einem der vorhergehenden Ansprüche, **dadurch gekennzeichnet, dass** eine Flanke (32, 34, 74) des Vorsprungs oder der Ausnehmung (26, 28, 70), in die das Kupplungsmittel (50, 50a bis 50e, 52, 52a bis 52e) über den ersten Kontaktbereich (58, 58b, 58c, 60, 60b, 60c, 62, 64) eingreift, senkrecht zur Längsachse (30) des Gestänges (22, 72) oder in einem spitzen Winkel zur Längsachse (30) des Gestänges (22, 72) angeordnet ist.

9. Vorrichtung nach Anspruch 8, **dadurch gekennzeichnet, dass** die Ausnehmung (26, 28, 70) bzw. der Vorsprung eine der ersten Flanke (32) gegenüberliegende zweite Flanke (34) hat, wobei die Flanken (32, 34) spiegelsymmetrisch zu einer Ebene (36) angeordnet sind, die orthogonal zur Längsachse (30) des Gestänges (22, 72) angeordnet ist.

10. Vorrichtung nach Anspruch 8 oder 9, **dadurch gekennzeichnet, dass** eine auf der Oberfläche der Flanke (32, 34) verlaufende Gerade die Längsachse (30) in einem Schnittwinkel (α) schneidet, der einen Wert im Bereich zwischen 25° und 65°, vorzugsweise im Bereich zwischen 30° und 60°, insbesondere einen Wert von 45°, hat.

11. Vorrichtung nach einem der Ansprüche 7 bis 10, **dadurch gekennzeichnet, dass** das Kupplungsmittel (50, 50a bis 50e, 52, 52a bis 52e) einen Eingriffsbereich zum Eingriff in den Vorsprung und/oder in die Ausnehmung hat, der den ersten Kontaktbereich (58, 58b, 58c, 60, 60b, 60c, 62, 64) umfasst, wobei der Eingriffsbereich des Kupplungsmittels beim Übertragen der ersten Vorschubkraft über den ersten Kontaktbereich (58, 58b, 58c, 60, 60b, 60c, 62, 64) komplementär zur Flanke (32, 34, 74) der Aussparung ist, sodass beim Eingriff ein Flächenkontakt zwischen dem ersten Kontaktbereich (58, 58b, 58c, 60, 60b, 60c, 62, 64) und der Flanke (32, 34, 74) des Vorsprungs und/oder der Ausnehmung (26, 28, 70) erfolgt.

12. Vorrichtung nach einem der Ansprüche 7 bis 10, **dadurch gekennzeichnet, dass** das Kupplungsmittel (58, 58b, 58c, 60, 60b, 60c, 62, 64) einen Eingriffsbereich zum Eingriff in den Vorsprung und/oder in die Ausnehmung (26, 28, 70) hat, der den ersten Kontaktbereich (58, 58b, 58c, 60, 60b, 60c, 62, 64) umfasst, wobei der Eingriffsbereich und die Flanke des Vorsprungs bzw. der Ausnehmung (26, 28, 70) nicht parallel verlaufen.

13. Vorrichtung nach Anspruch 12, **dadurch gekennzeichnet, dass** eine auf der Oberfläche der Flanke (32, 34, 74) verlaufende Gerade die Längsachse (30) des Gestänges (22, 72) in einem ersten Schnittwinkel (α) schneidet, dass eine auf der Oberfläche des Eingriffsbereichs verlaufende Gerade die Längsachse des Gestänges beim Übertragen der ersten Vorschubkraft in einem zweiten Schnittwinkel schneidet, und dass der erste Schnittwinkel (α) größer oder kleiner als der zweite Schnittwinkel ist.

14. Vorrichtung nach einem der Ansprüche 10 bis 13, **dadurch gekennzeichnet, dass** der bzw. die Schnittwinkel bzw. der erste und der zweite Schnittwinkel in einer Ebene angeordnet ist, die die Längsachse (30) des Gestänges (22, 72) enthält und deren Normalenvektor parallel zu der Drehachse (80) des Kupplungsmittels (50, 50a bis 50e, 52, 52a bis 52e) verläuft.

15. Vorrichtung nach einem der vorhergehenden Ansprüche, **dadurch gekennzeichnet, dass** eine Kupplungsanordnung (20, 20a bis 20e) vorgesehen ist, die mindestens zwei jeweils um eine Drehachse (80) drehbare Kupplungsmittel (50, 50a bis 50e, 52, 52a bis 52e) zum Erzeugen einer Antriebsverbindung zwischen der Zug-/Schubeinheit (16) und dem Gestänge (22, 72) umfasst,
dass die Kupplungsmittel (50, 50a bis 50e, 52, 52a bis 52e) jeweils mit einem Vorsprung und/oder einer Ausnehmung (26, 28, 70) des Gestänges (22, 72) derart in Eingriff bringbar sind, dass das jeweilige Kupplungsmittel (50, 50a bis 50e, 52, 52a bis 52e) über einen ersten Kontaktbereich (58, 58b, 58c, 60, 60b, 60c, 62, 64) des jeweiligen Kupplungsmittels (50, 50a bis 50e, 52, 52a bis 52e) jeweils eine erste Vorschubkraft der Zug-/Schubeinheit (16) auf das Gestänge (22, 72) überträgt, und
dass die der ersten Vorschubkraft entgegengerichtete Gegenkraft ein auf das jeweilige Kupplungsmittel (50, 50a bis 50e, 52, 52a bis 52e) wirkendes Drehmoment erzeugt, durch das ein zweiter Kontaktbereich (76, 76a, 76a', 76d, 76e, 78, 78a, 78a', 78d, 78e, 90, 91) des Kupplungsmittels (50, 50a bis 50e, 52, 52a bis 52e) mit einer Anpresskraft gegen das Gestänge drückt.

16. Vorrichtung nach Anspruch 15, **dadurch gekennzeichnet, dass** die Kupplungsanordnung (20, 20a bis 20e) zwei Kupplungsmittel (50, 50a bis 50e, 52, 52a bis 52e) umfasst, die auf zwei gegenüberliegenden Seiten des Gestänges (22, 72) in denselben Vorsprung und/oder dieselbe Ausnehmung (26, 28, 70) oder in gegenüberliegende Vorsprünge und/oder gegenüberliegende Ausnehmungen (26, 28, 70) des Gestänges (22, 72) eingreifen.

17. Vorrichtung nach Anspruch 15 oder 16, **dadurch gekennzeichnet, dass** die Kupplungsanordnung (20, 20a bis 20e) mindestens drei Kupplungsmittel (50, 50a bis 50e, 52, 52a bis 52e) umfasst, die radial um das Gestänge (22, 72), vorzugsweise mit gleichen Winkelabständen zueinander, angeordnet sind und die in denselben Vorsprung und/oder dieselbe Ausnehmung (26, 28, 70) oder in jeweils einen Vorsprung und/oder jeweils eine Ausnehmung (26, 28, 70) eingreifen.

18. Vorrichtung nach einem der vorhergehenden Ansprüche, **dadurch gekennzeichnet, dass** durch den Eingriff des Kupplungsmittels (50, 50a bis 50e, 52, 52a bis 52e) eine Drehung des Kupplungsmittels (50, 50a bis 50e, 52, 52a bis 52e) um die Drehachse (80) derart erfolgt, dass ein zweiter Kontaktbereich (76, 76a, 76a', 76d, 76e, 78, 78a, 78a', 78d, 78e, 90, 91) des Kupplungsmittels (50, 50a bis 50e, 52, 52a bis 52e) mit einer Anpresskraft gegen das Gestänge (22, 72) drückt.

19. Verfahren zum Bewegen eines Arbeitsmittels im Erdreich,
bei dem ein um eine Drehachse (80) drehbares Kupplungsmittel (50, 50a bis 50e, 52, 52a bis 52e) zum Erzeugen einer Antriebsverbindung zwischen einer Zug-/Schubeinheit (16) und einem mindestens einen Vorsprung und/oder mindestens eine Ausnehmung (26, 28, 70) aufweisenden Gestänges (22, 72) derart mit dem Vorsprung und/oder der Ausnehmung (26, 28, 70) des Gestänges (22, 72) in Eingriff gebracht wird, dass über einen ersten Kontaktbereich (58, 58b, 58c, 60, 60b, 60c, 62, 64) des Kupplungsmittels (50, 50a bis 50e, 52, 52a bis 52e) eine erste Vorschubkraft von der Zug-/Schubeinheit (16) auf das Gestänge (22, 72) übertragen wird,
durch die der ersten Vorschubkraft entgegengerichtete Gegenkraft ein auf das Kupplungsmittel wirkendes Drehmoment erzeugt wird, das einen zweiten Kontaktbereich (76, 76a, 76a', 76d, 76e, 78, 78a, 78a', 78d, 78e, 90, 91) des Kupplungsmittels (50, 50a bis 50e, 52, 52a bis 52e) mit einer Anpresskraft gegen das Gestänge (22, 72) drückt,
durch die Anpresskraft eine kraftschlüssige Verbindung zwischen der Zug-/Schubeinheit (16) und dem Gestänge (22, 72) hergestellt wird,
über diese kraftschlüssige Verbindung eine zweite Vorschubkraft auf das Gestänge (22, 72) übertragen wird, und
bei dem durch zumindest einen Teil der auf das Gestänge (22, 72) wirkenden ersten und zweiten Vorschubkraft eine lineare Bewegung des Gestänges (22, 72) bewirkt wird.

## Claims

1. A device for moving a working means in the ground, comprising
a push-pull unit (16) for generating a linear movement of a rod assembly (22, 72) having at least one projection and/or at least one recess (26, 28, 70),
at least one coupling means (50, 50a to 50e, 52, 52a to 52e) rotatable about an axis of rotation (80) for establishing a drive connection between the push-pull unit (16) and the rod assembly (22, 72),
wherein the coupling means (50, 50a to 50e, 52, 52a to 52e) can be engaged with the projection and/or the recess (26, 28, 70) of the rod assembly (22, 72) such that the coupling means (50, 50a to 50e, 52, 52a to 52e) transmits a first feed force from the push-pull unit (16) to the rod assembly (22, 72) via a first contact area (58, 58b, 58c, 60, 60b, 60c, 62, 64) of the coupling means (50, 50a to 50e, 52, 52a to 52e), **characterized in that** the counter force opposite to the first feed force generates a torque acting on the coupling means (50, 50a to 50e, 52, 52a to 52e), which torque presses a second contact area (76, 76a, 76a', 76d, 76e, 78, 78a, 78a', 78d, 78e, 90, 91) of the coupling means (50, 50a to 50e, 52, 52a to 52e) with a contact force against the rod assembly (22, 72),
wherein the coupling means (50, 50a to 50e, 52, 52a to 52e) establishes a non-positive connection between the push-pull unit (16) and the rod assembly (22, 72) by the contact force and transmits a second feed force to the rod assembly (22, 72) via this non-positive connection, and
wherein at least a part of the first and second feed force acting on the rod assembly (22, 72) causes the linear movement of the rod assembly (22, 72).

2. The device according to claim 1, **characterized in that** the push-pull unit (16) is pressure-medium actuated and comprises at least one working cylinder (18) and a piston having a piston rod, and **in that** the piston rod or the working cylinder (18) is connected to a coupling arrangement (20, 20a to 20e) comprising the coupling means and moves the coupling arrangement relative to a frame (12) of the device (10).

3. The device according to claim 2, **characterized in that** the working cylinder (18) and the piston rod have a channel for the passage of the rod assembly (22, 72).

4. The device according to one of the preceding claims, **characterized in that** the linear movement of the rod assembly (22, 72) generates a pulling motion or a pushing motion of a working means connected to an end region of the rod assembly (22, 72).

5. The device according to one of the preceding claims, **characterized in that** a coupling arrangement (20, 20a to 20e) comprising the coupling means (50, 50a to 50e, 52, 52a to 52e) is formed as an automatic coupling arrangement (20, 20a to 20e) which clamps the rod assembly (22, 72) in one working direction of the push-pull unit (16) and is movable freely relative to the rod assembly (22, 72) in the opposite direction.

6. The device according to claim 5, **characterized in that** the working direction of the coupling arrangement (20, 20a to 20e) is reversible by a reversal of the coupling means (50, 50a to 50e, 52, 52a to 52e).

7. The device according to one of the preceding claims, **characterized in that** the rod assembly (22, 72) has several recesses, each of which in the form of circumferential grooves (26, 28, 70) or circumferential projections, the distance between two adjacent recesses (26, 28, 70) or, respectively, projections being smaller or equal to the length of a linear movement which can be generated by the push-pull unit (16) in one working step.

8. The device according to one of the preceding claims, **characterized in that** a flank (32, 34, 74) of the projection or of the recess (26, 28, 70) into which the coupling means (50, 50a to 50e, 52, 52a to 52e) engages via the first contact area (58, 58b, 58c, 60, 60b, 60c, 62, 64) is arranged perpendicularly to the longitudinal axis (30) of the rod assembly (22, 72) or in an acute angle to the longitudinal axis (30) of the rod assembly (22, 72).

9. The device according to claim 8, **characterized in that** the recess (26, 28, 70) or, respectively, the projection has a second flank (34) opposite to the first flank (32), wherein the flanks (32, 34) are arranged mirror-symmetrically to a plane (36) which is arranged orthogonally to the longitudinal axis (30) of the rod assembly (22, 72).

10. The device according to claim 8 or 9, **characterized in that** a straight line extending on the surface of the flank (32, 34) intersects the longitudinal axis (30) in an angle of intersection (α) which has a value in the range between 25° and 65°, preferably in the range between 30° and 60°, in particular a value of 45°.

11. The device according to one of the claims 7 to 10, **characterized in that** the coupling means (50, 50a to 50e, 52, 52a to 52e) has an engagement area for engagement with the projection and/or the recess, which engagement area comprises the first contact area (58, 58b, 58c, 60, 60b, 60c, 62, 64), wherein the engagement area of the coupling means is complementary to the flank (32, 34, 74) of the recess during transmission of the first feed force via the first contact area (58, 58b, 58c, 60, 60b, 60c, 62, 64) so that during engagement a surface contact between the first contact area (58, 58b, 58c, 60, 60b, 60c, 62, 64) and the flank (32, 34, 74) of the projection and/or the recess (26, 28, 70) is established.

12. The device according to one of the claims 7 to 10, **characterized in that** the coupling means (50, 50a to 50e, 52, 52a to 52e) has an engagement area for engagement with the projection and/or the recess (26, 28, 70), which engagement area comprises the first contact area (58, 58b, 58c, 60, 60b, 60c, 62, 64), wherein the engagement area and the flank of the projection or, respectively, the recess (26, 28, 70) do not extend parallel.

13. The device according to claim 12, **characterized in that** a straight line extending on the surface of the flank (32, 34, 74) intersects the longitudinal axis (30) of the rod assembly (22, 72) in a first angle of intersection (α), **in that** a straight line extending on the surface of the engagement area intersects the longitudinal axis of the rod assembly during transmission of the first feed force in a second angle of intersection, and **in that** the first angle of intersection (α) is greater or smaller than the second angle of intersection.

14. The device according to one of the claims 10 to 13, **characterized in that** the angle of intersection or the angles of intersection or, respectively, the first and the second angle of intersection are arranged in a plane which includes the longitudinal axis (30) of the rod assembly (22, 72) and the normal vector of which runs parallel to the axis of rotation (80) of the coupling means (50, 50a to 50e, 52, 52a to 52e).

15. The device according to one of the preceding claims, **characterized in that** a coupling arrangement (20, 20a to 20e) is provided which comprises at least two coupling means (50, 50a to 50e, 52, 52a to 52e) each of which rotatable about an axis of rotation (80) for establishing a drive connection between the push-pull unit (16) and the rod assembly (22, 72),
**in that** the coupling means (50, 50a to 50e, 52, 52a to 52e) can each be engaged with a projection and/or a recess (26, 28, 70) of the rod assembly (22, 72) such that the respective coupling means (50, 50a to 50e, 52, 52a to 52e) each time transmits a first feed force of the push-pull unit (16) to the rod assembly (22, 72) via a first contact area (58, 58b, 58c, 60, 60b, 60c, 62, 64) of the respective coupling means (50, 50a to 50e, 52, 52a to 52e), and
**in that** the counter force opposite to the first feed force generates a torque acting on the respective coupling means (50, 50a to 50e, 52, 52a to 52e), by which torque a second contact area (76, 76a, 76a', 76d, 76e, 78, 78a, 78a', 78d, 78e, 90, 91) of the coupling means (50, 50a to 50e, 52, 52a to 52e) presses against the rod assembly with a contact force.

16. The device according to claim 15, **characterized in that** the coupling arrangement (20, 20a to 20e) comprises two coupling means (50, 50a to 50e, 52, 52a to 52e) which engage with the same projection and/or the same recess (26, 28, 70) on two opposite sides of the rod assembly (22, 72) or with opposite projections and/or opposite recesses (26, 28, 70) of the rod assembly (22, 72).

17. The device according to claim 15 or 16, **characterized in that** the coupling arrangement (20, 20a to 20e) comprises at least three coupling means (50, 50a to 50e, 52, 52a to 52e) which are arranged radially about the rod assembly (22, 72), preferably at the same angular distance from each other, and which engage with the same projection and/or the same recess (26, 28, 70) or with one projection each and/or one recess (26, 28, 70) each.

18. The device according to one of the preceding claims, **characterized in that** by the engagement of the coupling means (50, 50a to 50e, 52, 52a to 52e) a rotation of the coupling means (50, 50a to 50e, 52, 52a to 52e) about the axis of rotation (80) takes place such that a second contact area (76, 76a, 76a', 76d, 76e, 78, 78a, 78a', 78d, 78e, 90, 91) of the coupling means (50, 50a to 50e, 52, 52a to 52e) is pressed against the rod assembly (22, 72) with a contact force.

19. A method for moving a working means in the ground,
in which a coupling means (50, 50a to 50e, 52, 52a to 52e) rotatable about an axis of rotation (80) for establishing a drive connection between a push-pull unit (16) and a rod assembly (22, 72) having at least one projection and/or at least one recess (26, 28, 70) is engaged with the projection and/or the recess (26, 28, 70) of the rod assembly (22, 72) such that via a first contact area (58, 58b, 58c, 60, 60b, 60c, 62, 64) of the coupling means (50, 50a to 50e, 52, 52a to 52e) a first feed force is transmitted from the push-pull unit (16) to the rod assembly (22, 72),
by the counter force opposite to the first feed force a torque acting on the coupling means is generated, which torque presses a second contact area (76, 76a, 76a', 76d, 76e, 78, 78a, 78a', 78d, 78e, 90, 91) of the coupling means (50, 50a to 50e, 52, 52a to 52e) against the rod assembly (22, 72) with a contact force,
by the contact force, a non-positive connection is established between the push-pull unit (16) and the rod assembly (22, 72),
via this non-positive connection, a second feed force is transmitted onto the rod assembly (22, 72), and
in which by at least a part of the first and second feed force acting on the rod assembly (22, 72) a linear movement of the rod assembly (22, 72) is caused.

## Revendications

1. Dispositif pour déplacer un moyen de travail dans la terre, ledit dispositif comportant
une unité de poussée/traction (16) pour générer un mouvement linéaire d'une barre (22, 72) comportant au moins une saillie et/ou un évidement (26, 28, 70), au moins un moyen de couplage (50, 50a à 50e, 52, 52a à 52e) apte à tourner autour d'un axe de rotation (80) et destiné à générer une liaison d'entraînement entre l'unité de poussée/traction (16) et la barre (22, 72),
le moyen de couplage (50, 50a à 50e, 52, 52a à 52e) étant apte à venir s'engager avec la saillie et/ou l'évidement (26, 28, 70) de la barre (22, 72) de sorte que le moyen de couplage (50, 50a à 50e, 52, 52a à 52e) transmet par le biais d'une première région de contact (58, 58b, 58c, 60, 60b, 60c, 62, 64) du moyen de couplage (50, 50a à 50e, 52, 52a à 52e) une première force d'avancement de l'unité de poussée/traction (16) à la barre (22, 72), **caractérisé en ce que** la force antagoniste opposée à la première force d'avancement génère un couple de rotation agissant sur le moyen de couplage (50, 50a à 50e, 52, 52a à 52e) qui presse une deuxième région de contact (76, 76a, 76a', 76d, 76e, 78, 78a, 78a', 78d, 78e, 90, 91) du moyen de couplage (50, 50a à 50e, 52, 52a à 52e) contre la barre (22, 72) avec une force de pressage,
le moyen de couplage (50, 50a à 50e, 52, 52a à 52e) établissant par le biais de la force de pressage une liaison par adhérence entre l'unité de poussée/traction (16) et la barre (22, 72) et transmettant par le biais de cette liaison par adhérence une deuxième force d'avancement à la barre (22, 72), et
au moins une partie des première et deuxième forces d'avancement qui agit sur la barre (22, 72) produisant le déplacement linéaire de la barre (22,72).

2. Dispositif selon le revendication 1, **caractérisé en ce que** l'unité de poussée/traction (16) est commandée par un moyen de pression et comporte au moins un cylindre de travail (18) et un piston doté d'une barre de piston, et **en ce que** la barre de piston ou le cylindre de travail (18) est relié à un système de couplage (20, 20a à 20e) comportant un moyen de couplage et déplace ce système de couplage par rapport à un cadre (12) du dispositif (10).

3. Dispositif selon la revendication 2, **caractérisé en ce que** le cylindre de travail (18) et la barre de piston possède un canal pour le passage de la barre (22, 72).

4. Dispositif selon l'une des revendications précédentes, **caractérisé en ce que** le mouvement linéaire de la barre (22, 72) génère un mouvement de traction ou un mouvement de poussée d'un moyen de travail relié à une région d'extrémité de la barre (22, 72).

5. Dispositif selon l'une des revendications précédentes, **caractérisé en ce qu'**un système de couplage (20, 20a à 20e) comportant le moyen de couplage (50, 50a à 50e, 52, 52a à 52e) est conformé en système de couplage automatique (20, 20a à 20e) qui serre la barre (22, 72) dans une direction de travail de l'unité de poussée/traction (16) et qui peut être déplacé librement par rapport à la barre (22, 72) dans la direction opposée.

6. Dispositif selon la revendication 5, **caractérisé en ce que** la direction de travail du système de couplage (20, 20a à 20e) peut être inversée en changeant la marche du moyen de couplage (50, 50a à 50e, 52, 52a à 52e).

7. Dispositif selon l'une des revendications précédentes, **caractérisé en ce que** la barre (22, 72) possède plusieurs saillies circulaires ou évidements conformés chacun en gorges circulaires (26, 28, 70), la distance entre deux évidements adjacents (26, 28, 70) ou saillies étant inférieure ou égale à la longueur d'un mouvement linéaire pouvant être généré dans une étape de travail par l'unité de poussée/traction (16).

8. Dispositif selon l'une des revendications précédentes, **caractérisé en ce qu'**un flanc (32, 34, 74) de la saillie de l'évidement (26, 28, 70), dans lequel le moyen de couplage (50, 50a à 50e, 52, 52a à 52e) s'engage par le biais de la première région de contact (58, 58b, 58c, 60, 60b, 60c, 62, 64), est disposé perpendiculairement à l'axe longitudinal (30) de la barre (22, 72) ou suivant un angle aigu par rapport à l'axe longitudinal (30) de la barre (22, 72).

9. Dispositif selon la revendication 8, **caractérisé en ce que** l'évidement (26, 28, 70) ou la saillie possède un deuxième flanc (34) opposé au premier flanc (32), les flancs (32, 34) étant disposés symétriquement par rapport à un plan (36) qui est disposé orthogonalement à l'axe longitudinal (30) de la barre (22, 72).

10. Dispositif selon la revendication 8 ou 9, **caractérisé en ce qu'**une droite passant par la surface du flanc (32, 34) coupe l'axe longitudinal (30) suivant un angle d'intersection (α) qui est une valeur dans la plage entre 25° 65°, de préférence dans la plage entre 30° et 60°, notamment une valeur de 45°.

11. Dispositif selon l'une des revendications 7 à 10, **caractérisé en ce que** le moyen de couplage (50, 50a à 50e, 52, 52a à 52e) possède une région d'engagement qui est destinée à s'engager dans la saillie et/ou dans l'évidement et qui comporte la première région de contact (58, 58b, 58c, 60, 60b 60c, 62, 64), la région d'engagement du moyen de couplage étant complémentaire au flanc (32, 34, 74) de l'évidement lors de la transmission de la première force d'avancement sur la première région de contact (58, 58b, 58c, 60, 60b, 60c, 62, 64) de sorte que, lors de l'engagement, un contact de surface est réalisé entre la première région de contact (58, 58b, 58c, 60, 60b, 60c, 62, 64) et le flanc (32, 34, 74) de la saillie et/ou de l'évidement (26, 28, 70).

12. Dispositif selon l'une des revendications 7 à 10, **caractérisé en ce que** le moyen de couplage (58, 58b, 58c, 60, 60b, 60c, 62, 64) possède une région d'engagement destinée à s'engager dans la saillie et/ou dans l'évidement (26, 28, 70) qui comporte la première région de contact (58, 58b, 58c, 60, 60b, 60c, 62, 64), la région d'engagement et le flanc de la saillie ou de l'évidement (26, 28, 70) n'étant pas parallèles.

13. Dispositif selon la revendication 12, **caractérisé en ce qu'**une droite passant par la surface du flanc (32, 34, 74) coupe l'axe longitudinal (30) de la barre (22, 72) suivant un premier angle de coupe (α), **en ce qu'**une droite passant par la surface de la région d'engagement coupe l'axe longitudinal de la barre lors de la transmission de la première force d'avancement suivant un deuxième angle de coupe, et **en ce que** le premier angle de coupe (α) est supérieur ou inférieur au deuxième angle de coupe.

14. Dispositif selon l'une des revendications 10 à 13, **caractérisé en ce que** le ou les angles de coupe ou les premier et deuxième angles de coupe sont disposés dans un plan qui contient l'axe longitudinal (30) de la barre (22, 72), dont le vecteur normal est parallèle à l'axe de rotation (80) du moyen de couplage (50, 50a à 50e, 52, 52a à 52e).

15. Dispositif selon l'une des revendications précédentes, **caractérisé en ce qu'**il est prévu un système de couplage (20, 20a à 20e) qui comporte au moins deux moyens de couplage (50, 50a à 50e, 52, 52a à 52e) qui sont aptes à tourner chacun autour d'un axe de rotation (80) et qui sont destinés à établir une liaison d'entraînement entre l'unité de poussée/traction (16) et la barre (22, 72), **en ce que** les moyens de couplage (50, 50a à 50e, 52, 52a à 52e) peuvent venir en engagement avec une saillie et/ou un évidement (26, 28, 70) de la barre (22, 72) de sorte que le moyen de couplage correspondant (50, 50a à 50e, 52, 52a à 52e) transmet une première force d'avancement de l'unité de poussée/traction (16) à la barre (22, 72) sur une première région de contact (58, 58b, 58c, 60, 60b, 60c, 62, 64) du moyen de couplage correspondant (50, 50a à 50e, 52, 52a à 52e), et
**en ce que** la force antagoniste opposée à la première force d'avancement génère un couple de rotation qui agit sur le moyen de couplage correspondant (50, 50a à 50e, 52, 52a à 52e) et qui permet à une deuxième région de contact (76, 76a, 76a', 76d, 76e, 78, 78a, 78a', 78d, 78e, 90, 91) du moyen de couplage (50, 50a à 50e, 52, 52a à 52e) de presser contre la barre avec une force de pressage.

16. Dispositif selon la revendication 15, **caractérisé en ce que** le système de couplage (20, 20a à 20e) comporte deux moyens de couplage (50, 50a à 50e, 52, 52a à 52e) qui s'engagent sur deux côtés opposés de la barre (22, 72) dans la même saillie et/ou le même évidement (26, 28, 70) ou dans des saillies opposées et/ou évidements opposés (26, 28, 70) de la barre (22, 72).

17. Dispositif selon la revendication 15 ou 16, **caractérisé en ce que** le système de couplage (20, 20a à 20e) comporte au moins trois moyens de couplage (50, 50a à 50e, 52, 52a à 52e) qui sont disposés radialement autour de la barre (22, 72), de préférence angulairement à équidistance l'un de l'autre, et qui s'engagent dans la même saillie et/ou le même évidement (26, 28, 70) ou dans une saillie correspondante et/ou un évidement correspondant (26, 28, 70).

18. Dispositif selon l'une des revendications précédentes, **caractérisé en ce que** l'engagement du moyen de couplage (50, 50a à 50e, 52, 52a à 52e) permet au moyen de couplage (50, 50a à 50e, 52, 52a à 52e) de tourner autour de l'axe de rotation (80) de sorte qu'une deuxième région de contact (76, 76a, 76a', 76d, 76e, 78, 78a, 78a', 78d, 78e, 90, 91) du moyen de couplage (50, 50a à 50e, 52, 52a à 52e) presse contre la barre (22, 72) avec une force de pressage.

19. Procédé de déplacement d'un moyen de travail dans la terre, dans lequel
un moyen de couplage (50, 50a à 50e, 52, 52a à 52e) qui est apte à tourner autour d'un axe de rotation (80) et qui est destiné à établir une liaison d'entraînement entre l'unité de poussée/traction (16) et une barre (22, 72) comportant au moins une saillie et/ou au moins un évidement (26, 28, 70) est amené en engagement avec la saillie et/ou l'évidement (22, 28, 70) de la barre (22, 72) de sorte qu'une première force d'avancement est transmise de l'unité de poussée/traction (16) à la barre (22, 72) sur une première région de contact (58, 58b, 58c, 60, 60b, 60c, 62, 64) du moyen de couplage (50, 50a à 50e, 52, 52a à 52e),
la force antagoniste opposée à la première force d'avancement génère un couple de rotation qui agit sur le moyen de couplage et qui presse une deuxième région de contact (76, 76a, 76a', 76d, 76e, 78, 78a, 78a', 78d, 78e, 90, 91) du moyen de couplage (50, 50a à 50e, 52, 52a à 52e) contre la barre (22,72) avec une force de pressage,
la force de pressage établit une liaison par adhérence entre l'unité de poussée/traction (16) et la barre (22, 72),
cette liaison par adhérence transmet une deuxième force d'avancement à la barre (22, 72), et
dans laquelle au moins une partie des première et deuxième forces d'avancement agissant sur la barre (22, 72) produit un mouvement linéaire de la barre (22, 72).
